(19) Europäisches Patentamt
European Patent Office
Office européen des brevets

(11) EP 1 040 547 B1

(12) EUROPEAN PATENT SPECIFICATION

(45) Date of publication and mention
of the grant of the patent:
30.06.2004  Bulletin 2004/27

(51) Int Cl.⁷: $H02J\ 7/10$, H02J 7/00

(21) Application number: 98946265.0

(86) International application number:
PCT/DK1998/000420

(22) Date of filing: 29.09.1998

(87) International publication number:
WO 1999/017418 (08.04.1999 Gazette 1999/14)

(54) **METHOD AND APPARATUS FOR CHARGING A RECHARGEABLE BATTERY**

VERFAHREN UND VORRICHTUNG ZUM LADEN EINER WIEDERAUFLADBAREN BATTERIE

PROCEDE ET APPAREIL PERMETTANT DE CHARGER UNE BATTERIE RECHARGEABLE

(84) Designated Contracting States:
AT BE CH CY DE DK ES FI FR GB GR IE IT LI LU
MC NL PT SE
Designated Extension States:
AL LT LV MK RO SI

(30) Priority: 15.12.1997  DK 145697
29.01.1998  DK 12998

(43) Date of publication of application:
04.10.2000  Bulletin 2000/40

(73) Proprietor: CHARTEC LABORATORIES A/S
2920 Charlottenlund (DK)

(72) Inventors:
• OSTERGAARD, Kim
DK-2800 Lyngby (DK)
• NIELSEN, Otto, Martinus
DK-2970 Horsholm (DK)
• ANDERSEN, Kim, Arthur, Stück
DK-2990 Niva (DK)
• MICHELSEN, Jesper
DK-2800 Lyngby (DK)
• RASMUSSEN, Kim
DK-2750 Ballerup (DK)

(74) Representative: Plougmann & Vingtoft A/S
Sundkrogsgade 9,
P.O. Box 831
2100 Copenhagen O (DK)

(56) References cited:
EP-A- 0 616 281        EP-A- 0 862 256
WO-A-96/15563          FR-A- 2 707 438
US-A- 5 572 110        US-A- 5 631 537
US-A- 5 637 981        US-A- 5 654 622

• BENCHMARQ MICROELECTRONICS, INC.:
"bq2053x Lithium Ion Pack Supervisor" DATA
SHEET,September 1996, pages 1-7,
XP002065430 available from internet: <URL:
"HTTP://WWW.BENCHMARQ.COM/PROD/BQ20
53.PDF" > 19 May 1998 cited in the application
• BENCHMARQ MICROELECTRONICS, INC.:
"bq2153 Li-Ion Pack Supervisor Modul" DATA
SHEET,May 1996, page 1-8 XP002065432
DALLAS, TX; available from internet: <URL:
"HTTP://WWW.BENCHMARQ.COM/PROD/BQ21
53.PDF" > 19 May 1998
• NATIONAL SEMICONDUCTOR CORP:
"COP8ACC5 8-Bit Microcontroller with High
Resolution A/D Conversion" DATA
SHEET,March 1997, pages 1-40, XP002093318
AVAILABLE FROM INTERNET: <URL:
http://www.national.com/ds/CO/COP8ACC5.pdf
on 12 February 1999 cited in the application

**Description**

The present invention relates to a method and an apparatus for charging a rechargeable battery. More particularly, the present invention is directed to voltage controlled charging of batteries. The invention extends to batteries being connected to a battery protection circuit interrupting charging of the rechargeable battery if the battery voltage reaches a protection circuit threshold voltage, and to batteries without any protection circuit.

Generally, when charging a rechargeable battery or a secondary battery such as a NiCd (Nickel-Cadmium) or NiMH (Nickel-Metal-Hydride) battery, it is known to have a rapid charging process wherein a relatively high constant charging current is applied to the battery until a certain event occurs. This event might be a sudden increase in the battery temperature or a drop in the terminal voltage of the battery.

However, when charging rechargeable batteries such as lead storage batteries, lithium type batteries including lithium-ion batteries, lithium polymer batteries and lithium solid state batteries no certain event is detected for the fully charged state. Generally, this type of batteries is first charged with a constant current until the detected battery voltage reaches a predetermined full charge or end-of-charge voltage. Subsequently, in a second charging step, the voltage is maintained at its end-of-charge voltage while the charging current falls off until it reaches a predetermined small value indicating that the battery is fully charged.

In U.S. Pat. No. 5,637,981 it is discussed that a rechargeable or secondary battery is composed of an ideal battery and an inner resistor, and that a constant voltage circuit for charging in the second charging step is also composed of an ideal constant voltage circuit and an inner resistor. Hence, the charging current creates a voltage drop across these inner resistors with the result that the charging voltage applied to the ideal battery is reduced in the constant voltage charging mode, thereby leading to a prolonged charging time.

Thus, in order to obtain a shorter charging time, there is a need of charging with a high charging voltage, which is higher than the end-of-charge or full-charge voltage, taking into account the voltage drop across the inner resistors. However, when the rechargeable battery has a built-in protection circuit, which stops charging when the charging voltage gets higher than a predetermined threshold voltage, this protection circuit will normally stop the charging process when charging with such high charging voltage.

A solution to this problem is proposed in U.S. Pat. No. 5,637,981, where the charger is tailored to a specific battery pack and allowed to inhibit the protective operation of the protection circuit, thereby allowing a higher charging voltage. A similar solution is proposed in U.S. Pat. No. 5,654,622, where a charger is allowed to program the protection circuit to a higher threshold voltage, thereby allowing a higher charging voltage for at least part of the charging process.

A common drawback of the above referenced charging processes is the interference with the protection circuit, thereby changing or inhibiting the operation of this circuit. This might lead to faulty programming of the protection circuit resulting in an overcharge of the battery, which again might destroy or deteriorate the battery.

US 5,572,110 describes a smart battery charger system including a smart battery charger that responds to charging instructions of a smart battery. The smart battery includes a memory that stores battery-specific charging characteristics. The smart battery determines a desired charging voltage and desired charging current based on measured environmental conditions, such as battery temperature, and the charging characteristics. A bus allows the smart battery to communicate the desired charging voltage and charging current to the smart battery charger. The smart battery charger generates the actual charging voltage and charging current in response to the desired charging voltage and charging current.

EP 0 862 256 describes a battery charging system that includes a rechargeable battery including at least one rechargeable battery cell, battery terminals, and information means that contain information about the battery in the form of an information code. The charging apparatus includes information receiving means for electronically reading or sensing the information code. The charging apparatus also includes a control means for controlling the charging process based on the information code. The information code stores a single maximum charging voltage.

Thus, there is a need for a battery charging method and an apparatus allowing a charging process, in which the battery is charged during at least part of the charging process with a charging voltage higher than the end-of-charge voltage thereby allowing a rapid charging, but with the charging process being controlled so as to avoid activation of the pre-programmed protection circuit.

According to a preferred embodiment of the invention, a charging voltage corresponding to the battery terminal voltage when the charging current is supplied to the battery is determined or measured during at least part of the charging process, and

the battery is charged in a charging voltage control mode based on the determined or measured charging voltage.

Preferably, the battery terminal voltage is measured during periods of non-interrupted supply of the charging current.

The charging current may be supplied from an electrical power source or supply. When charging the battery in the charging voltage control mode, it is preferred that the output of the power supply is controlled so that the determined charging voltage does not exceed a predetermined level or value, referred to as a first protection voltage.

The charging voltage may preferably be measured as the battery terminal voltage. However, the charging voltage may also be determined or measured otherwise. Here it is important that the determined charging voltage corresponds to the battery terminal voltage, so that changes in the battery terminal voltage results in corresponding changes in the charging voltage.

When determining the charging voltage as the battery terminal voltage, the charging voltage can be split up in a battery voltage part, which equals the battery voltage when no charging current is applied, i.e. the open circuit battery voltage or the internal resistance free battery voltage, and a terminal voltage part, which in the following is defined as all other voltage drops present when measuring the battery terminal voltage. Hence, the terminal voltage part may include a voltage drop across the internal resistance of the battery, a voltage drop caused by the resistance of the protection circuit and/or voltage drops caused by other electronic components or circuits within the battery, such as a gas gauge circuitry or a protection diode arranged within the battery. Furthermore, the terminal voltage part may include what is referred to as the voltage drop across the resistance of the battery terminals, which may include a voltage drop across the terminals or contacts of the battery, a voltage drop across the terminals or contacts of a charger for charging the battery and/or a voltage drop due to an internal resistance of the charger, including one or more current sense resistors.

It should be understood that the above mentioned terminal voltage part is a function of the charging current supplied to the battery. Hence, for a high current the terminal voltage part will obtain a high value when compared to the battery voltage part, whereas for a low current, the terminal voltage will obtain a rather low value. This will be described in more details in the discussion of preferred embodiments.

When charging a battery of a type having an end-of-charge voltage and a protection circuit with a given threshold voltage, such as a lithium type or lithium-ion type battery, the battery voltage may increase during a first part of the charging process until the measured charging voltage reaches the end of charge voltage. At this point of charging, the charging current may still have a rather high value compared to an end-of-charge current. Thus, the terminal voltage part might have a high value, with the result that the battery voltage part is below the end-of-charge voltage. When the battery voltage part has not yet reached the end-of-charge voltage, a rapid charging process may be allowed by increasing the charging voltage above the end-of-charge voltage.

Thus, the charging voltage might be increased to the first protection voltage, which according to the invention should be determined so as to maintain the voltage applied to the protection circuit below the threshold voltage but above the end-of-charge voltage. Hence, several values might be chosen for the first protection voltage, but the closer the voltage at the protection circuit gets to the threshold voltage, the more rapid the charging process proceeds. One way of determining a value for the first protection voltage is to perform a test charging with a constant maximum charging current and allow the charging voltage to increase above the end-of-charge voltage until the protection circuits interrupts the charging process. At this point a threshold charging voltage is determined and the first protection voltage could then be set a little lower in value than this threshold charging voltage in order to maintain the protection circuit voltage below the threshold voltage and in order to take into account variations in threshold voltages of different protection circuits.

When performing a charging process and allowing the charging voltage to reach such a predetermined first protection voltage, further charging will lead to an increase in the battery voltage part of the charging voltage followed by a reduction in the charging current and hence a reduction in the terminal voltage part. When the current is reduced, the voltage drop from the battery charger to the protection circuit will also be reduced. Thus, this should be taken into account when determining the value of the first protection voltage, leading to a further reduction of the first protection voltage when compared to the above mentioned threshold charging voltage.

The first protection voltage can also be determined from calculations and/or measurements of different parts of voltage drops of the terminal voltage part compared to determined or measured values of the battery voltage part for the relevant charging currents.

Thus, the first protection voltage may be determined as a function of the threshold voltage, the voltage drop caused by the charging current in the internal resistance of the battery, the internal resistance of the protection circuit, the resistance of the battery terminals, the resistance of the charger terminals and/or one or more current sense resistors.

A preferred way of charging the battery so as to allow a high charging voltage, is to charge the battery in a constant charging voltage mode so as to maintain the charging voltage substantially at the first protection voltage for at least part of the charging process. Here, the first protection voltage should be determined so as to maintain the voltage applied to the protection circuit above the end-of-charge voltage and below the threshold voltage of the protection circuit, thereby avoiding charging interrupting by said protection circuit.

According to an embodiment of the present invention, the system for charging the battery may comprise means for determining or measuring the vohage level at the protection circuit. Hence, the methods of charging the battery may further comprise the steps of

determining or measuring during at least part of the charging process a protection circuit charging voltage corresponding to the protection circuit voltage when the charging current is supplied to the battery, and

charging the battery during at least part of step (b) in a protection circuit voltage control mode based on the determined or measured protection circuit charging voltage.

Thus, if the battery comprise means for determining or measuring the voltage level at the protection circuit, the method of charging the battery may also comprise the steps of

determining or measuring during at least part of the charging process a protection circuit charging voltage corresponding to the protection circuit voltage when the charging current is supplied to the battery, and

charging the battery in a protection circuit voltage control mode based on the determined or measured protection circuit charging voltage during at least part of the charging process so as to maintain the voltage applied to the protection circuit above the end-of-charge voltage and below the threshold voltage of the protection circuit, thereby avoiding charging interrupting by said protection circuit. The protection circuit charging voltage may preferably be measured for periods of non-interrupted supply of the charging current.

It is preferred that the protection circuit voltage control mode comprises charging the battery in a constant protection circuit voltage mode so as to maintain the measured protection circuit voltage substantially at a second protection voltage, said second protection voltage having a value above the end-of-charge voltage and being determined so that the voltage applied to the protection circuit when charging with the second protection voltage is below the threshold voltage thereby avoiding charging interrupting by said protection circuit.

It is preferred that the protection circuit charging voltage is determined directly as the protection circuit voltage. However, the protection circuit charging voltage may also be determined otherwise. Here it is important that the determined protection circuit charging voltage corresponds to the voltage applied to the protection circuit, so that changes in the voltage applied to the protection circuit results in corresponding changes in the determined protection circuit charging voltage.

When the protection circuit voltage is determined substantially directly, the second protection voltage should preferably be set to a value close to the threshold value of the protection circuit. However, again a margin may be given in order to allow for variations in threshold voltages of different protection circuits and in order to allow for an inaccuracy when measuring the protection circuit voltage. Thus, the second protection voltage may be determined as a function of the threshold voltage and variations in the threshold voltage. Furthermore, the second protection voltage may also be determined as a function of the internal resistance of the protection circuit. A lower limit of the second protection voltage may be determined as a function of the voltage drop caused by the charging current in the internal resistance of the battery

When charging according to the present invention, it is preferred that the internal at least substantially resistance free battery voltage is determined during at least part of the charging process, said resistance free voltage preferably being determined during periods in which the supply of charging current is interrupted or reduced. In one embodiment of the invention, the battery is charged in the charging voltage control mode or the constant charging voltage mode until the at least substantially resistance free voltage reaches the battery end-of-charge voltage.

If the battery is provided with a protection diode, it is necessary to have a small current flowing through this diode when measuring the internal at least substantially resistance free battery voltage. In this situation, the measured voltage will be the sum of the battery voltage and the voltage drop across the diode. It is therefore to be understood that when comparing the measured at least substantially resistance free battery voltage with the end-of-charge voltage, the measured voltage should be corrected for the voltage drop across the protection diode, if such a diode is inserted in the battery.

In a preferred embodiment, the second protection voltage may be set to a value close to the threshold voltage, whereas the first protection voltage may be chosen as an overall protection charging voltage. Thus, if the resistance of the terminals has a relatively high value generating a high voltage drop when charging with a high current, part of the charging process may follow the charging voltage control mode so as not to let the charging voltage exceed the first protection voltage. This charging voltage control mode may be followed until the charging current and the terminal voltage drop has dropped so much that the protection circuit voltage has increased to the second protection voltage. At this stage the charging process may proceed in the protection circuit voltage control mode with the protection circuit voltage being controlled so as not to exceed the second protection circuit voltage. Here, the protection circuit voltage control mode may be followed until the at least substantially resistance free voltage reaches the battery end-of-charge voltage.

The second protection voltage may be set to a value close to the threshold voltage.

It is also preferred that the internal at least substantially resistance free battery voltage is determined during at least part of the charging process as described above.

Here it is further preferred that the battery is charged in the protection circuit voltage control mode until the at least substantially resistance free voltage reaches the battery end-of-charge voltage.

When following any of the above mentioned charging processes until the at least substantially resistance free voltage reaches the battery end-of-charge voltage, the charging process may further comprise the steps of charging the battery in a resistance free voltage control mode so as to maintain the at least substantially resistance free battery voltage substantially at the battery end-of-charge voltage. Here it is preferred that charging in the resistance free voltage control mode is terminated when the charging current has decreased to a predetermined low end-of-charge current. When the charging current has decreased to such a low end-of-charge current, the battery should be charged to its almost fully charged state, and further charging may not add much capacity to the battery.

When charging the battery in a method according to any of the embodiments of the invention, it is preferred to firstly charge the battery in a constant current charging mode until the charging voltage reaches the first protection voltage or the protection circuit voltage reaches the second protection voltage, said constant current charging mode comprising a charging period with the battery being charged by a substantially constant current during at least part of said charging period.

When charging a rechargeable battery, the value of the charging current may be given as a relative measure compared to the capacity of the battery. Thus, if a battery is charged at a rate in ampere equal to the capacity in ampere-hours of the battery, the battery is charged with a 1C current. According to the present invention, the current supplied during the constant current charging mode may be supplied at a rate in amperes greater than 0,3C, preferably in the range of 0,5-5C, and even more preferably in the range around 1-2C.

When terminating the charging process, the end-of-charge current may be set in the range of 2-50% of the charging current of the constant current charging mode, preferably in the range of 5-20% of this current.

In order to measure the voltage applied to the protection circuit, it is preferred that the rechargeable battery further comprises voltage detection circuitry for measuring this voltage, said voltage detection circuitry preferably being a gas gauge circuitry.

However, as the voltage window ranging from the end-of-charge voltage to the threshold voltage may be rather narrow, as will be described in the examples, it is important that the output from the voltage detection circuitry gives a substantially correct measure of the protection circuit voltage. This is not always the case when using commercially available circuits which might be intended for gas gauge purposes. Hence, there is a need for calibrating the output of the voltage detection circuitry.

It is therefore preferred that the charging method according to the present invention including a protection circuit voltage control mode further comprises an initial charging phase for calibrating the output of the voltage detection circuitry, the result of said calibration being used for correcting the output of the voltage detection circuitry so as to measure a corrected protection circuit voltage when charging in the protection circuit voltage control mode. The phase of calibration may comprise the steps of:

> determining the battery voltage given as output by the voltage detection circuitry,
> determining the battery terminal voltage,
> comparing the determined terminal voltage with the determined output of the voltage detection circuitry,
> determining based on said comparison a voltage correction value for the voltage detection circuitry, and
> storing said voltage correction value.

When determining the battery terminal voltage and the voltage detection circuitry output voltage during the calibration process, it is preferred that the supply of charging current to the battery is interrupted or the charging current is supplied at a reduced rate compared to the maximum charging current, to allow an internal at least substantially resistance free voltage detection. For batteries having a protection diode, the voltage drop across this diode should be corrected for in the battery terminal voltage when determining the voltage correction value.

In an embodiment of the invention, the system and/or apparatus further comprises:

> means for determining a protection circuit charging voltage by measuring the protection circuit voltage for periods of non-interrupted supply of charging current, and
> means for controlling the charging process in a protection circuit voltage control mode based on the determined protection circuit charging voltage during at least part of the charging process so as to maintain the voltage applied to the protection circuit above the end-of-charge voltage and below the threshold voltage of the protection circuit.

Here, the charging process control means may also comprise:

> means for charging the battery in a constant protection circuit voltage mode so as to maintain the measured protection circuit voltage substantially at a second protection voltage stored in storage means, said second protection voltage having a value above the end-of-charge voltage and being determined so that the voltage applied to the protection circuit when charging with the second protection voltage is below the threshold voltage.

Preferably, the system and/or apparatus further comprises:

means for determining the internal at least substantially resistance free battery voltage, said charging process control means being adapted to terminate charging in the charging voltage control mode or the protection circuit voltage control mode when the at least substantially resistance free voltage reaches the battery end-of-charge voltage. Preferably, the means for determining the resistance free voltage is adapted to measure this voltage during periods in which the supply of charging current is interrupted or reduced.

The determination of the first and the second protection voltage has been discussed above.

Any of the above mentioned systems and/or apparatuses having means for determining the internal at least substantially resistance free battery voltage may further comprise means for charging the battery in a resistance free voltage control mode so as to maintain the at least substantially resistance free battery voltage substantially at the battery end-of-charge voltage. Preferably, the charging process control means is adapted to terminate charging in the resistance free voltage control mode when the charging current has decreased to a predetermined low end-of-charge current.

Any of the systems and/or apparatuses according to the aspects of the invention may further have the charging process control means adapted to control the supply of the charging current in a constant current charging mode until the charging voltage reaches the first protection voltage, the protection circuit voltage reaches the second protection voltage or the internal resistance free voltage reaches the end-of-charge voltage, said constant current charging mode comprising a charging period with the battery being charged by a substantially constant current during at least part of said charging period. Here, the charging control means should be adapted to control the supply of charging current at a rate in amperes greater than 0,3C, preferably in the range of 0,5-5C, and even more preferably in the range around 1-2C.

For embodiments of the systems and/or apparatuses according to the invention having means for determining the protection circuit charging voltage, it is preferred that these means is adapted to communicate with or reading the output of a voltage detection circuitry for measuring the voltage applied to the protection circuit, said voltage detection circuitry being arranged within the battery and preferably being a gas gauge circuitry. Furthermore, it is preferred that the charging process control means is adapted to control an initial charging phase for calibrating the output of the voltage detection circuitry, and further being adapted for using the result of said calibration for correcting the output of the voltage detection circuitry so as to measure a corrected protection circuit voltage when charging in the protection circuit voltage control mode.

In order to perform this phase of calibration, the charging process control means may further comprise storage means and be adapted to control the phase of calibration by:

determining the battery voltage given as output by the voltage detection circuitry,
determining the battery terminal voltage,
comparing the determined terminal voltage with the determined output of the voltage detection circuitry,
determining based on said comparison a voltage correction value for the voltage detection circuitry, and
storing said voltage correction value in the storage means.

Here, the charging process control means should preferably be adapted to determine the voltage detection circuitry output voltage and the battery terminal voltage during the phase of calibration when the supply of charging current to the battery is interrupted or the charging current is supplied at a low rate.

Previously, it has been discussed that in order to charge at a high charging rate during a protection circuit voltage control mode, it is important to have a substantially correct measurement of the voltage applied to the protection circuit in order to control the charging process so as to avoid interrupting of the charging process. Such interrupting will occur if the protection circuit voltage reaches a predetermined threshold voltage.

When determining the voltage correction value, it is preferred that the determination of the voltage detection circuitry output voltage and the battery terminal voltage is performed so as to correspond to voltage determination for one or more charging periods in which the supply of charging current to the battery is interrupted or the charging current is supplied at a reduced rate compared to the maximum charging current. This allows an internal at least substantially resistance free voltage detection. For batteries having a protection diode, the voltage drop across this diode should be corrected for in the battery terminal voltage when determining the voltage correction value.

The second protection voltage may be set to a value close to the threshold voltage taking into account the variations of the threshold voltages for different circuits. It is also preferred that the internal at least substantially resistance free battery voltage is determined during at least part of the charging process as previously described, and that the battery is charged in the protection circuit voltage control mode until the at least substantially resistance free voltage reaches the battery end-of-charge voltage.

Again, it is preferred that the step of charging in the protection circuit voltage control mode is followed by further charging the battery in a resistance free voltage control mode so as to maintain the at least substantially resistance free battery voltage substantially at the battery end-of-charge voltage. This resistance free voltage control mode should preferably be terminated when the charging current has decreased to a predetermined low end-of-charge current. Furthermore, the charging current should preferably be supplied in a constant current charging mode before entering the protection circuit voltage control mode, and the constant current charging mode should comprise a charging period with the battery being charged by a substantially constant current during at least part of said charging period.

In order to determine the voltage correction value, it is preferred that the means for determining the voltage correction value comprises:

> means for determining the battery voltage given as an output by the voltage detection circuitry,
> means for determining the battery terminal voltage,
> means for comparing the determined terminal voltage with the determined output of the voltage detection circuitry,
> means for determining based on said comparison a voltage correction value for the voltage detection circuitry, and
> means for storing said voltage correction value.

The above described embodiments of the apparatus of the invention may preferably be used for charging batteries having a predetermined end-of-charge voltage, with the means for determining the corrected protection circuit voltage preferably being adapted to perform this determination corresponding to one or more charging periods of non-interrupted supply of charging current, and the charging process control means being adapted to charge the battery in a protection circuit voltage control mode based on the determined corrected protection circuit voltage during at least part of the charging process so as to maintain the voltage applied to the protection circuit above the end-of-charge voltage and below the threshold voltage of the protection circuit.

The means for controlling the charging process should preferably be further adapted to charge the battery in a constant protection circuit voltage mode so as to maintain the corrected protection circuit voltage substantially at a second protection voltage stored in storage means, said second protection voltage having a value above the end-of-charge voltage and being determined so that the voltage applied to the protection circuit when charging with the second protection voltage is below the threshold voltage.

The second protection voltage may be set to a value close to the threshold voltage taking into account the variations of the threshold voltages for different circuits. It is also preferred that the apparatus further comprises means for determining the internal at least substantially resistance free battery voltage, which may be determined during periods in which the supply of charging current is interrupted or reduced, and that the charging process control means is adapted for charging the battery in the protection circuit voltage control mode until the at least substantially resistance free voltage reaches the battery end-of-charge voltage. The charging process control means should preferably be-adapted to further charge the battery in a resistance free voltage control mode so as to maintain the at least substantially resistance free battery voltage substantially at the battery end-of-charge voltage. The charging process control means may further be adapted to terminate charging in the resistance free voltage control mode when the charging current has decreased to a predetermined low end-of-charge current. Furthermore, the charging process control means may be adapted to control the supply of the charging current in a constant current charging mode before entering the protection circuit voltage control mode, with the constant current charging mode comprising a charging period with the battery being charged by a substantially constant current during at least part of said charging period.

The above described methods and apparatuses should be applicable for all type of rechargeable batteries having a protection circuit. These battery types may include the known battery types already mentioned above, but new battery types such as Zinc-Air or Zinc-Silver batteries may be included. However, the methods and apparatuses may preferably be used for charging lithium type batteries including batteries having lithium-ion type cells, batteries having lithium solid state (LSS) cells, and batteries having lithium polymer cells.

It has previously been discussed that it is known to charge a lithium type battery with a predetermined end-of-charge voltage in a constant current charging mode followed by a constant voltage charging mode. Usually, such a charging process is terminated when the charging current during the constant voltage charging mode has decreased to a predetermined low end-of-charge current. This process of termination may also be used in connection with the above described methods and apparatuses according to the present invention.

However, in order to secure a full charge of the battery, this end-of charge current may be set at a rather low value such as for example 5-10% of the maximum charging current. Such low values of charging currents may be rather difficult to measure within the desired accuracy, which may result in charging times being longer than necessary. Alternatively, a more complicated and expensive current detection circuitry may be used.

Thus, there is a need for a simple and effective way of terminating the charging process for lithium type batteries or any other type of batteries having a predetermined end-of-charge voltage.

Here, the remaining period of charging time is preferably determined so as to assure a full charging of the battery without overcharging.

The characteristic charging parameter may be chosen from parameters such as charging voltage, protection circuit voltage (for batteries including a protection circuit), open circuit voltage (which also may be referred to as an at least substantially resistance free voltage), charging current and/or battery temperature.

Thus, the charging process may preferably further comprise determining either the charging voltage, the protection circuit voltage or the open circuit voltage for at least part of the charging process, and determining the remaining period of charging time when the determined voltage reaches a predetermined value. This predetermined voltage value may represent a maximum charging voltage, a maximum protection circuit voltage or a maximum open circuit voltage. Preferably, the voltage control mode is controlled so as not to have the charging voltage, the protection circuit voltage or the open circuit voltage exceeding their corresponding maximum voltage value.

In order to determine the remaining period of charging time it is preferred to make use of an electronic memory which stores one or more periods of remaining charging time. These periods may correspond to the maximum charging voltage, the maximum protection circuit voltage and/or the maximum open circuit voltage.

However, in another embodiment of the invention, the charging process is controlled so that the charging current is decreased in the voltage control charging mode, and the remaining period of charging time is determined as a function of the charging current or determined when the charging current has decreased to a predetermined value. The battery charging process may first comprise a current control mode before entering the voltage control mode, with the apparatus further comprising means for controlling the charging process in such a current control mode during at least part of the charging process. The predetermined current value may then be determined as a function of a maximum charging current supplied in the current control charging mode. The predetermined current value may be set in the range of 10-90%, preferably in the range of 20-80%, and even more preferably in the range of 30-70%, for example about 50%, of the maximum charging current.

When determining the remaining period of charging time as a function of the charging current it is preferred to make use of an electronic memory which stores one or mpre remaining periods of charging time corresponding to the charging current value or values.

Such batteries may include known or new battery types already mentioned above. However, the methods and apparatuses according to the fourth aspect of the invention may preferably be used for charging lithium type batteries including batteries having lithium-ion type cells, batteries having lithium solid state (LSS) cells, and batteries having lithium polymer cells.

As described above the present invention comprises several aspects providing charging solutions for charging batteries having a protection circuit or being connected to a protection circuit. However, the underlying charging principles of the above described aspects of the present invention may also be used in order to avoid overcharging when fast-charging batteries without any protection circuit, or for charging processes in which the voltage of the protection circuit is not taken into account.

Here, an external safety voltage being above the end-of-charge voltage may be determined or calculated according to the discussion of the determination of the first protection voltage for batteries having a protection circuit. Thus, the external safety voltage should have a value which avoids a high loss of energy in the ohmic resistance of the battery and the battery terminals. Preferably, the external safety voltage may be determined as a function of the end-of-charge voltage. However, the safety voltage may also be determined as a function of both the end-of-charge voltage and as a function of one ore more current sense resistors, the charger terminal resistance, the battery terminal resistance, the internal cell resistance and/or the charging current. The voltage drop given by the charging current multiplied by the calculated terminal resistance, current sense resistance and/or internal resistance may be added to the end-of-charging voltage to thereby define the external safety voltage.

From experiments it has been found that the external safety voltage should be in the range of 100-140% of the end-of-charge voltage, preferably in the range of 100-110% of the end-of-charge voltage. Thus, for a 3 cell battery where the end-of-charge voltage is around 4,1 V/cell, giving a battery end-of-charge voltage of 12,3V, the external safety voltage may be set around 13,5V. However, if the battery comprises a protection diode, the voltage drop caused by this diode should be taken into account.

When charging a battery without a protection circuit or without taken into account the voltage of a protection circuit, there may also be a need for having a correct measurement of the internal battery cell voltage during the supply of a charging current, in order to substantially avoid the voltage drop caused by the charging current across the battery terminals.

In a preferred embodiment the internal safety voltage may be substantially equal to the end-of-charge voltage or determined as a function of the end-of-charge voltage. However, in order to fast charge the battery the internal safety voltage may be set to a higher voltage than the end-of-charge voltage. Thus, the safety voltage may also be determined as a function of both the end-of-charge voltage and as a function of an internal cell resistance and/or the charging current. Here, the voltage drop given by the charging current multiplied by the measured or calculated internal cell resistance may be added to the end-of-charging voltage to thereby define the internal safety voltage. From experiments it has been found that the external safety voltage should be in the range of 100-140% of the end-of-charge voltage, preferably in the range of 100-110% of the end-of-charge voltage.

When charging a rechargeable battery according to one or more of the above mentioned aspects of the present invention it may be understood that in order to perform a quick charging process by delivering a relatively high charging current to the battery during at least part of the charging process it is convenient to use more than one charging voltage parameter. However, in order for the battery charger to control the charging process based on such charging voltage parameters, these parameters need to be available to the charger system. Thus, charging parameters for different batteries may be pre-stored in a memory of the battery charger and the relevant parameters may be selected by using a battery identifier or identification code read from the battery.

However, when introducing new battery types to the market, such batteries might need charging parameters which were not available when charging parameters were stored in the memory of the battery charger. Thus, a more flexible solution has been proposed in which maximum charging parameters such as a maximum charging voltage and a maximum charging current is pre-stored in the battery pack itself and communicated to the battery charger before starting the charging process. This allows the battery charger to be adapted to any new battery type without having any prior knowledge of pre-defined charging parameters for such new batteries.

However, it has not been proposed to have several charging voltage parameters stored in the battery to thereby allow fast charging of the battery.

Such a charging system is achieved according to the present invention by a battery charging system comprising:

 a battery including at least one rechargeable battery cell and information means for storing battery information indicative of at least a first and a second charging voltage parameter, and
 a battery charger including information receiving means for reading or sensing the stored battery information whereby charging of the battery may be controlled based on the first and second charging voltage parameters,

the first and second charging voltage parameters representing predetermined maximum charging voltage levels. It is preferred that the first charging voltage parameter is indicative of a higher voltage level than indicated by the second charging voltage parameter.

In order for the battery charger to control the charging process based on the charging voltage parameters, the system should further comprise a power supply for providing a charging current to said battery and a communication bus. Here the information receiving means may receive the stored battery information via the communication bus, and the control means may control the power supply output based on the first and second charging voltage parameters.

In a preferred embodiment the battery to be charged may have a predetermined end-of-charge voltage, and for such batteries it is preferred that the second charging voltage parameter indicates a second voltage level substantially equal to a predetermined maximum end-of-charge voltage.

When charging the battery it is preferred that the battery charger is adapted to control at least part of the charging process in a first voltage control mode so as to maintain a measured charging voltage substantially at or below a first voltage level indicated by the first charging voltage parameter. Here, the charging system may further comprise means for determining an external charging voltage representing an external battery terminal voltage when a charging current is supplied to the battery, and the first charging voltage parameter may indicate a first voltage level substantially equal to a predetermined maximum external charging or safety voltage. The system may additionally or alternatively comprise means for determining an internal charging cell voltage representing an internal cell voltage when a charging current is supplied to the battery, and here the first charging voltage parameter may indicate a first voltage level substantially equal to a predetermined maximum internal charging or safety voltage. If the battery comprises a protection circuit for interrupting charging when the voltage applied to the protection circuit reaches a predetermined threshold voltage, the system may additionally or alternatively comprise means for determining a protection circuit charging voltage representing the voltage applied to the protection circuit when a charging current is supplied to the battery, and here the first charging voltage parameter may indicate a first voltage level substantially equal to a predetermined maximum protection circuit charging voltage.

It should be understood that according to an embodiment of the invention, the battery information may also indicate a third charging voltage parameter. Here, the first charging voltage parameter may indicate the first voltage level corresponding to the above mentioned maximum internal charging voltage or the maximum protection circuit voltage, while the third charging voltage parameter may then indicate a third voltage level corresponding to the maximum external charging or safety voltage. Preferably, the third charging voltage parameter is indicative of a higher voltage than indicated by the first charging voltage parameter. Thus, the battery charger may be adapted to control at least part of the charging process in a third voltage control mode so as to maintain the measured external charging voltage substantially at or below the third voltage level, which may by the maximum external charging or safety voltage. Charging in the third voltage control mode may then be followed by charging in the first voltage control mode.

According to a preferred embodiment of the present invention, the battery charger may be adapted to control at least part of the charging process in a second voltage control mode so as to maintain a measured battery voltage substantially at or below a second voltage level indicated by the second charging voltage parameter. Here, the battery charger should preferably be adapted to charge the battery in the first voltage control mode during a part of the charging process followed by charging the battery in the second voltage control mode during another part of the charging process. Accordingly, the present invention also comprises an embodiment with the charger being adapted to charge the battery in the third voltage control mode, followed by charging in the first voltage control mode, which is then followed by charging in the second voltage control mode. Preferably, the system comprises means for determining an at least substantially resistance free battery voltage, and the battery charger may then be adapted to control the second voltage control mode so as to maintain the at least substantially resistance free battery voltage substantially at or below the maximum end-of-charge voltage.

When charging in the first voltage control mode, it is preferred that the battery charger is adapted to terminate charging in the first voltage control mode when the at least substantially resistance free battery voltage reaches the maximum end-of-charge voltage.

The present invention also provides a battery comprising at least one rechargeable battery cell and information means for storing battery information indicative of at least a first and a second charging voltage parameter, said battery information having a form which may be read or sensed by information receiving means of a corresponding battery charger. It should be understood that according to the present invention, the corresponding battery charger comprises control means for controlling charging of the battery based on the first and second charging voltage parameters indicated by the battery information.

Such a battery should be applicable for use in a battery charging system according to any of the above described embodiments of battery charging systems according to the present invention.

Thus, it is preferred that the first and second charging voltage parameters stored in the battery represent predetermined maximum charging voltage levels. It is also preferred that the first charging voltage parameter is indicative of a higher voltage level than indicated by the second charging voltage parameter.

Preferably, the battery has a predetermined maximum end-of-charge voltage and the second charging voltage parameter indicates a second voltage level substantially equal to a predetermined maximum end-of-charge voltage.

The battery according to the invention may further comprise a protection circuit for interrupting charging when the voltage applied to the protection circuit reaches a predetermined threshold voltage, and preferably the first charging voltage parameter indicates a first voltage level substantially equal to a predetermined maximum protection circuit charging voltage.

The information means included in the battery for storing the battery information may be quite simple storing means, such as for example a resistor network comprising one or more resistors, were the value(s) of the resistor(s) may be read by the battery charger to thereby transfer battery information stored in the battery to the charger. However, in another preferred embodiment the information means for storing the battery information comprises one or more electronic memories, which may be selected from the group consisting of non-volatile ROM, EEPROM, EPROM, and any combination thereof. Preferably, the battery information is pre-stored in the electronic memory, and the battery information may further be indicative of a maximum charging current parameter and/or an end-of-charge current parameter. Here, the maximum charging current parameter may be used for control of the charging process before entering a voltage control mode, and the end-of-charge current parameter may be used for terminating the charging process during a voltage control mode.

It should be understood that the battery system according to the invention provides a charging system where the battery may be charged according to any of the previously mentioned charging methods in which the charging process comprises at least one charging voltage control mode with the battery being supplied with a charging voltage greater than a predetermined end-of-charge voltage.

Thus, any of the first and second protection voltages and the external and internal safety voltages as described in the discussion of the previous aspects of the present invention may be used as the first voltage level indicated by the first charging voltage parameter. If the battery also comprise information of a third charging parameter, the first protection voltage or the external safety voltage may be used as the third voltage level, while the second protection voltage or the internal safety voltage may be used as the first voltage level.

It should be understood that the present invention should be applicable to all the battery types and technologies mentioned for the previous discussed methods and apparatuses or systems of the present invention.

The operation of the invention, together with further objects and advantages thereof, may best be appreciated by reference to the following detailed description taken in conjunction with the accompanying drawing, in which:

Fig. 1 is a block diagram of a battery charging apparatus and a battery pack according to an embodiment of the present invention,

Fig. 2 is a circuit diagram showing an embodiment of a battery pack charged according to the present invention,

Fig. 3 is a flow chart illustrating a charging process according to an embodiment of the present invention,

Fig. 4 is a flow chart illustrating a charging process according to an embodiment of the present invention,

Fig. 5 is a flow chart illustrating a charging process according to an embodiment of the present invention,

Fig. 6 is a flow chart illustrating a charging process according to an embodiment of the present invention,

Fig. 7 is a flow chart illustrating a charging process according to an embodiment of the present invention,

Fig. 8 is a flow chart illustrating a calibration process according to an embodiment of the present invention,

Fig. 9 illustrates a known charging process,

Fig. 10 illustrates a high current charging process according to an embodiment of the present invention,

Fig. 11 illustrates a low current charging process according to an embodiment of the present invention,

Fig. 12 is a flow chart illustrating a charging process according to an embodiment of the present invention, and

Fig. 13 is a circuit diagram showing another embodiment of a battery pack charged according to the present invention.

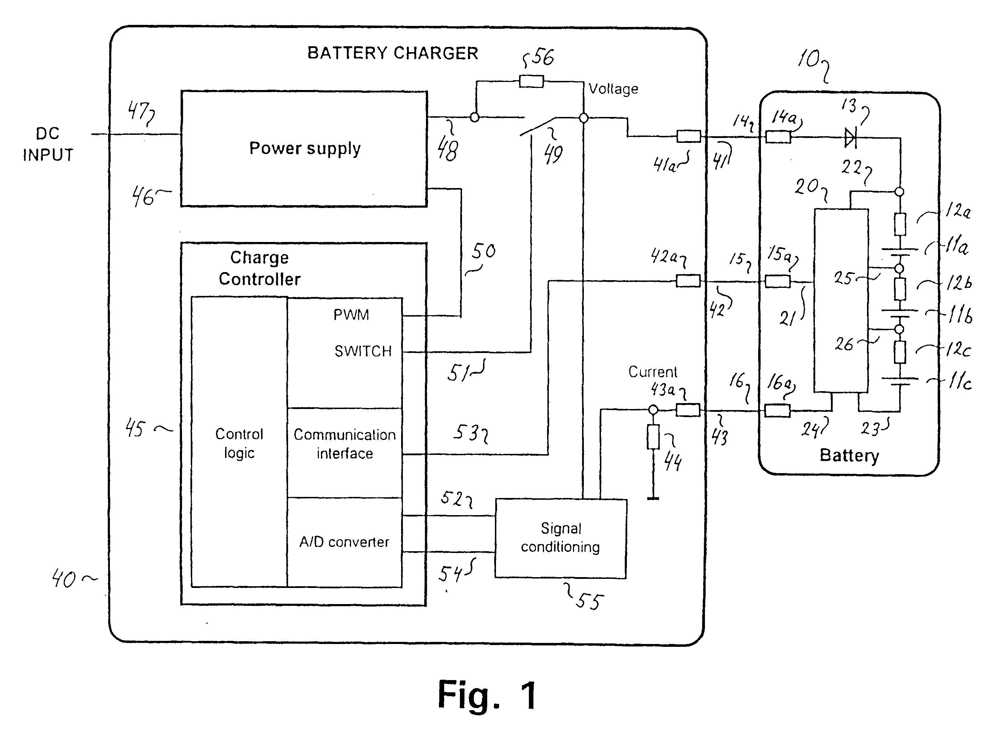

The basic operational principles of a battery charger according to the invention is illustrated in Fig. 1.

Fig. 1 shows a battery pack 10 which is to be charged by a battery charger apparatus 40. The battery pack 10 comprises a number of series connected individual battery cells 11a, 11b, 11c having a corresponding internal battery cell resistance indicated by 12a, 12b, 12c, a battery pack supervisor 20 having a protection circuit, a battery protection diode 13 and battery pack terminals 14, 15, 16, each having a corresponding terminal loss resistance 14a, 15a, 16a. Battery voltage is provided across terminals 14 and 16, while terminal 15 is connected to a serial input/output 21 of the battery pack supervisor 20 for single line communication between the battery pack 10 and the charger 40. This single line communication is optional, but included in a preferred embodiment as illustrated in Fig. 1. The supervisor circuit has terminals 22, 23 and 24 which are connected to the positive terminal of the battery cells, the negative terminal of the battery cells and the negative battery output voltage terminal 16, respectively. In a preferred embodiment, the supervisor circuit also has terminals 25 and 26 for monitoring single cell voltage of the battery cells.

The battery charger 40 has battery terminals 41, 42, 43 each having a corresponding terminal loss resistance 41a, 42a, 43a. When charging a battery the charger terminals 41, 42, 43 are connected to battery terminals 14, 15, 16, respectively. The charger 40 also comprises a power supply 46, a micro controller 45 for charge control, a signal conditioning circuitry 55, and a current sense resistor 44 connected to the charger terminal 43 and ground. When charging a battery the charging current creates a voltage drop across the resistor 44, which signal is fed to the conditioning circuitry 55 from where it goes through connection line 54 to an analogue-to-digital, A/D, converter input of the micro controller 45. The battery terminal voltage signal is measured as the voltage between terminal 41 and ground by having the signal of terminal 41 fed to the conditioning circuitry 55 from where it goes through connection line 52 to another A/D converter input of the micro controller 45, while the single line communication signal from the battery pack is fed to a communication port of the micro controller 45 through line 53.

The power supply 46, which preferably is a switch mode power supply, has a power input 47 which is supplied with a DC voltage, preferably in the range of 15-20 Volts DC for a 3 cell battery. For a battery with one or two cells, the DC voltage may be smaller. The power supply has an output terminal 48 which provides the charging power to the terminals 41 and 14, preferably through a switch 49. The charging output 48 of the power supply 46 is controlled from a control output 50 of the micro controller 45. When the power supply 46 is a switch mode power supply the control output 50 is preferably a PWM (pulse wide modulated) signal, which may be fed to a filter for converting the PWM signal to a variable analogue voltage, which is then used for the control of the power supply 46. When using a PWM control signal 50, the micro controller 45 controls the power output to the battery 10 and terminal 48 by controlling the duration of on- and off-periods of the PWM signal.

The signal conditioning 55 circuitry converts the input signal of terminals 41 and 43 representing the terminal voltage and the charging current to voltage output signals being suitable as input signals for the analogue to digital, A/D, converter inputs 52 and 54 of the micro controller 45. Preferably, the current sense resistor 44 has a very low value which may be around $0,1\ \Omega$, and the signal conditioning circuitry 55 may then comprise an operational amplifier in order to provide a suitable output. The supply voltage for the micro controller 45 is preferably around 5 Volts, and since the battery terminal voltage may exceed 5 Volts, the conditioning circuitry may also comprise a voltage divider for providing a suitable output signal for the battery terminal voltage.

It is preferred that the micro controller 45 comprises a switch control output 51 for switching the switch 49 on and off. The switch 49 may be turned off at short time intervals during the charging process in order to measure an open circuit voltage of the battery, thereby avoiding the voltage drop from the internal loss resistance when measuring the battery terminal voltage. However, when the battery has a protection diode 13, a by-pass resistor 56 connects the charging output 48 to terminal 41 to thereby allow a positive bias of the protection diode 13. It is preferred that the by-pass resistor 56 has a value which will only allow a small current to flow into the battery pack, for example 1 k$\Omega$.

When charging a battery as illustrated in Fig. 1, the charging current will create voltage drops across the resistance of terminals 41, 14, 16, 43, the internal resistance 12 of the battery cells 11, the internal resistance of the supervisor circuit 20, and the sense resistor 44. Furthermore, a voltage drop is also found across the protection diode 13. The sum of these voltage drops, which is also referred to as the terminal voltage part, should be subtracted from the voltage measured by the micro controller 45 at terminal 41 in order to determine the actual voltage across the battery cells 11, also referred to as the resistance free battery voltage or the battery voltage part. The terminal voltage part will increase with increasing charging current, while for low charging currents, the terminal voltage part will be close to the protection diode 13 voltage drop or, when no protection diode is present, close to zero when compared to the battery voltage part. Thus, when measuring the open circuit voltage by having the switch 49 turned off, only a small charging current is allowed to run through the by-pass resistor 56, with the result that the measured terminal voltage, which represents an at least substantially resistance free battery voltage when corrected for the protection diode 13 voltage drop, will be a good measure for the control of the battery cell voltage.

The micro controller 45, which for example may be an COP 8ACC from National Semiconductor, is programmed to implement battery charging in accordance with the present invention. Thus, the micro controller 45 controls the power delivered from the power supply 46 to the battery 10 based upon the input signals. These input signals comprise the charging current via line 54 and the terminal voltage via line 52. Here, the terminal voltage represents the charging voltage when measured during periods of supply of a charging current, while it represents the above discussed open circuit voltage in periods when the switch 49 is turned off.

In a preferred embodiment as illustrated in Fig. 1, the input signals also comprise the single line communication signal from the battery pack via line 53. Thus, the micro controller 45 comprises a communication interface, which is programmed and being adapted so as to handle the communication to and from the battery pack 10. When the supervisor circuit 20 has a communication port 21 for communicating with the micro controller 45, the protection circuit also comprises circuitry for measuring the voltage at the protection circuit and for communicating information of the measured voltage to the micro controller 45.

In order for the micro controller 45 to select the right charging algorithm and/or maximum charging parameters, the supervisor circuit 20 may comprise information about the battery type and size and being adapted for communicating such information to the micro controller 45. The supervisor circuit 20 may also comprise circuitry for measuring the temperature of the battery pack and for communicating information of the measured battery temperature to the micro controller 45.

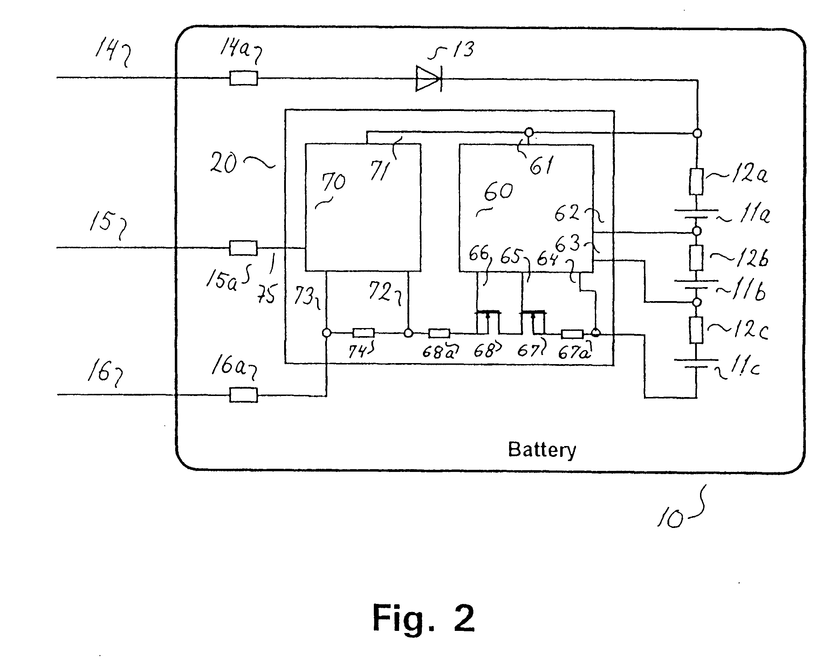

The battery pack 10 of Fig. 1 is shown in Fig. 2 illustrating details of a preferred embodiment of the battery pack supervisor 20. In Fig. 2 the same reference numerals have been used as in Fig. 1 when referring to the same components.

In Fig. 2 the battery pack supervisor 20 comprises a protection circuit 60 for protection the battery or battery cells 11a, 11b, 11c from being overcharged, i.e. the charging process is interrupted when the battery or the battery cell voltage exceeds a predetermined charging threshold voltage Vov. The protection circuit may also control the enabling of the charging process. Thus, charging is allowed when the per cell voltage is below a predetermined charge enable voltage Vce. Hence, if a charging process is interrupted due to a cell voltage reaching Vov, the charging process cannot be continued before the cell voltage has decreased to Vce. The protection circuit 60 may also be adapted for protection the battery or battery cells 11a, 11b, 11c from being over-discharged, i.e. the discharging process is interrupted if the battery or battery cell voltage gets lower than a predetermined discharging threshold voltage Vuv.

The protection circuit 60 may be adapted to only monitor the total battery cell voltage, but it is preferred that each battery cell is monitored, in order to secure detection of any single cell damage. Thus, each cell may have the positive and negative pole connected to the protection circuit 60. For the embodiment of Figs.1 and 2, the battery pack comprises a 3 cell lithium-ion battery with cell 11a being connected via pins 61 and 62, cell 11b being connected via pins 62 and 63, and cell 11c being connected via pins 63 and 64. The protection circuit 60 controls via pins 65 and 66 two switches 67 and 68. These switches are preferably MOSFET transistors each having a corresponding internal loss resistance 67a and 68a, which may have a value about 50m$\Omega$. If the charging threshold voltage is reached, the charging process is interrupted by turning off switch 68 via pin 66, and if the discharging threshold voltage is reached, the discharging process is interrupted by turning off switch 67 via pin 65.

An example of a protection circuit operating as described above is the bq2053 from BENCHMARQ Microelectronics, Inc., and further details of this circuit can be found in the bq2053 data-sheets of September 1996 from BENCHMARQ Microelectronics, Inc. Here, the overcharging limit Vov it set at 4,20V/cell with a tolerance of ± 1,5%, while Vce is set at (Vov - 100mV ± 50mV), and the over-discharge limit is set at Vuv = (2,3V ±100mV)/cell. Thus, for the 3 cell battery of the present embodiment, the total battery threshold voltage is 12,6V.

The battery pack supervisor of Fig. 2 may further comprise a circuit 70 for measuring the total battery voltage applied to the supervisor circuit 20 and thus reaching the protection circuit 60. Here, it is preferred that the circuit 70 for measuring the total protection circuit voltage is a gas gauge circuit, which also monitors the charging/discharging current by measuring the voltage drop across the sense resistor 74 via pins 72 and 73. The protection circuit voltage is measured via pins 71 and 72. Thus, when a charging current is allowed, there is a difference in the voltage across pins 61 and 64 of the protection circuit 60 and the voltage across pins 71 and 72 of the circuit 70, due to the loss resistors 67a and 68a.

From monitoring the battery voltage and the charging/discharging current, the circuit 70 can determine the power delivered to the battery and supplied by the battery. Thus, the remaining capacity of the battery can be determined. When adapted to measure battery temperature, the circuit 70 may compensate for temperature variations when determining the remaining capacity. When measuring the charging current the sense resistor 74 should be set at a low value such as 50m$\Omega$ in order to reduce the voltage drop across this resistor. The circuit 70 further comprises a serial input/output pin 75, corresponding to pin 21 of the supervisor circuit 20, for serial communication with the micro controller 45, to thereby transmit data which may concern voltage, current, temperature and/or battery capacity.

For the above discussed embodiment of the present invention a single communication line 53 is shown. However, it should be understood that the present invention also covers embodiments using a communication bus having two or more communication lines for communicating data from the battery to the charger.

An example of a gas gauge circuit operating as described above is the bq2050 from BENCHMARQ Microelectronics, Inc., and further details of this circuit can be found in the bq2050 data-sheets of September 1996 from BENCHMARQ Microelectronics, Inc., which is hereby included by reference. These data-sheets also comprise instructions on communicating with the bq2050, and thereby instructions of an example on how to program the communication interface part of the micro controller 45.

BENCHMARQ Microelectronics, Inc. also supplies a fully connected supervisor circuit bq2165, which comprises both bq2053 and bq2050. Further details of this circuit can be found in the bq2165 data-sheets of May 1996 from BENCHMARQ Microelectronics, Inc., which is hereby included by reference.

It should be understood that the present invention comprises both embodiments in which the protection circuit 60 is adapted to only interrupt the charging process when the total battery threshold voltage is reached, and embodiments in which the protection circuit 60 is adapted to interrupt charging when one of a plurality of battery cells reaches the cell threshold voltage. For single cell batteries the cell threshold voltage and the battery threshold voltage will be equal. Hence, the present invention relates to battery packs having one or more cells.

According to the supervisor circuit 20 of Fig. 2, the voltage detection circuit 70 is adapted to measure the total voltage of all the battery cells. A signal corresponding to this voltage may then be communicated to the micro controller 45, which may be adapted to control the power supply output during at least part of the charging process so as to maintain this voltage below the total battery threshold voltage or overcharge limit, which in the example is 12,6 V for a 3 cell battery. However, the present invention also covers embodiments in which the voltage detection circuit is adapted to measure the cell voltage of each of the cells of a battery having more than one cell. Hence, the charging process may be controlled during at least part of the charging process so that the cell voltage of each cell is maintained below the single cell threshold or overcharging limit voltage.

It is a subject of the present invention to allow a high charging rate without enabling the protection circuit 60, i.e. without having the voltage drop across the battery cells (the total voltage across the cells or the voltage across each individual cell) reaching the predetermined threshold voltage. Here, it should be understood that the highest battery cell voltage is obtained during periods of which the battery is charged with a high charging current, which creates voltage drops across the internal loss resistors 12a, 12b, 12c. These voltage drops are added to the resistance free battery cell voltages giving a resulting voltage, which should not exceed the threshold voltage.

For embodiments according to the present invention which do not comprise a voltage detection circuit 70, the voltage measured when a charging current is supplied will be the terminal voltage measured at terminal 41 of Fig. 1. Thus, this terminal voltage comprises the total battery cell voltage plus the voltage drop across the switch resistors 67a, 68a, across the terminal loss resistors 14a, 41a, 16a, 43a, and across the sense resistor 44. If a voltage detection circuit 70 is included, the terminal voltage also includes a voltage drop across the sense resistor 74. When the battery pack 10 comprises a protection diode 13, the terminal voltage also includes the voltage drop across this diode.

The resistance of the terminal loss resistors 14a, 41a, 16a, 43a, 15a, 42a should preferably have a very low value, which might be in the order of 10m$\Omega$. However, this resistance value will vary according to the contact material used with a material as beryllium-copper being a good choice for obtaining a low resistance value. Furthermore, the contact resistance between the terminals 14, 15, 16 of the battery pack 10, and the charger terminals 41, 42, 43 should also be taken into account. This contact resistance may show great variations, for example due to ageing of the contacts and bad connections. Thus, a total terminal loss resistance across terminals 14, 41 and terminals 16, 43 might be up to 100mΩ or even more.

As an example, the total voltage drop external to the battery cells may be calculated for a charging current of 1A (component reference numerals are given in parentheses):

$$1A[100mΩ(41, 14) + 50mΩ(67a) + 50mΩ(68a) + 50mΩ(74) + 100mΩ(16, 43) +$$

$$100mΩ(44)] + 300mV(13) = 750mV.$$

If the voltage drop of the diode is also set to 300mV for a charging current of 2A, the total voltage drop corresponding to the above mentioned resistance values for the 1A current would be 1,2V. Thus, for a 2A charging current and a protection circuit threshold voltage of 12,6V, the terminal voltage should reach 13,8V before the charging process is interrupted for these resistance values. The diode voltage of 300mV should be representative for Schottky-type diodes.

In order to control the charging process such as to allow a high charging current and a high charging or terminal voltage without having the protection circuit interrupting the charging process, a maximum charging voltage may be determined and used for the control of the charging process. The output of the power supply 48 should then be controlled so as not to allow the charging or terminal voltage to exceed this maximum charging voltage. The maximum charging voltage may also be referred to as a first protection voltage.

In the examples described herein the voltage drop of diode 13 is set to 300mV. However, a more accurate diode voltage drop may be determined by calculating the voltage drop as a function of diode current using the data sheets of the diode. Thus, for high currents a voltage drop of 400mV might be the result, whereas for a low charging current a voltage drop of 200mV might be the result. It is preferred to use 300mV during the high current part of the charging process, whereas it is preferred to use 200mV when correcting for the diode voltage drop in measured values of the open circuit voltage.

As described above, when using a contact material having a low resistance, the terminal loss resistance may be around 10mΩ. From experiments it has been found that a safe choice for the total terminal loss resistance across terminals 41, 14 and terminals 16, 43 should be 25mΩ, resulting in a voltage drop external to the battery cells of 600mV for 1A and 900mV for 2A using a diode voltage drop of 300mV. Before determining the maximum charging voltage, the variations in the threshold voltage should also be included. For a variation of ± 1,5% on 12,6V the minimum threshold voltage is 12,411V, which for safety reasons leads to a minimum threshold voltage of 12,4V. Thus, the maximum charging voltage may be set at 13,3V for a 2A charging current and 13,0V for a 1A charging current, thereby allowing a charging voltage higher than the threshold voltage.

For the lithium-ion batteries of the present embodiment of the invention, a battery end-of-charge voltage is given as 4,1V/cell, resulting in an end of charge voltage of 12,3V for the 3 cell battery. Thus, a voltage window of 100mV is obtained between the end-of-charge voltage and the minimum threshold protection circuit voltage, whereas voltage windows of 400mV and 700mV are obtained when correcting for the 300mV diode voltage and charging to a maximum charging voltage at 1A and 2A, respectively. Here, it should be understood that the end-of-charge voltage may be defined as the battery voltage of a fully or almost fully charged battery measured when charged with a low end of charge current corresponding to measuring the at least substantially resistance free battery voltage. Hence, the resistance free voltage across the battery cells should not exceed the end-of-charge voltage, but the total battery voltage when charged with a charging current may well be above the end-of-charge voltage due to the voltage drops across the internal resistance 12a, 12b, 12c of the battery cells. The higher the charging current, the higher the voltage drop across the internal resistance 12a, 12b, 12c of the battery.

It should further be noted that when charging a lithium type battery at a maximum charging voltage for a period of the charging process, the charging current may decrease when the charging process proceeds from the point in time at which the maximum charging voltage is reached. Hence, the voltage drop external to the battery cells will decrease with the result that the voltage reaching the protection circuit will increase after the point in time at which the maximum charging voltage is reached. This might be taken into account, when determining the maximum charging voltage.

For example when charging with a 2A charging current the battery might be charged at a maximum charging voltage for a period until the charging current has decreased to a lower level such as 1,5A, from which point in time other control mechanisms might take over. Here, the maximum charging voltage should be determined from the total voltage drop external to the battery cells caused by a current of 1,5A. Thus, a voltage drop of about 750mV should be preferred to the above calculated voltage drop of 900mV for the 2A charging current, leading to a maximum charging voltage or first protection voltage of 13,15V, and a voltage window of 850mV.

For embodiments according to the present invention which comprise both a protection circuit 60 and a voltage detection circuit 70, other or additional methods of controlling the charging process may be applied. Thus, the output of the power supply 48 may be controlled during part of the charging process based on the voltage reading of the voltage detection circuit 70. When a charging current is supplied to the battery, the voltage sensed by circuit 70 deviates from the voltage sensed by the protection circuit 60 due to the voltage drop across the switch loss resistors 67a and 68a. For switch losses of about 50mΩ per switch, charging currents of 1A and 2A may generate total voltage drops of about 100mV and 200mV, respectively, across loss resistors 67a and 68a.

Hence, when charging the battery at a maximum protection circuit voltage during part of the charging process, the measured protection circuit voltage should preferably be corrected for the voltage drop across loss resistors 67a, 68a. This might be done be determining this voltage drop as a function of charging current, and adding this determined voltage drop to the minimum threshold voltage in order to obtain a maximum protection circuit voltage for the control of the charging process. However, it is preferred to use a constant maximum protection circuit voltage taking into account the lower voltage drop at lower charging currents, and for the herein described example of a preferred embodiment of the invention, the charging process is controlled so that the current measured at circuit 70 does not exceed about 12,43V, i.e. a voltage drop around 30mV has been added to the minimum threshold voltage of 12,4V of the protection circuit. This corrected maximum protection circuit voltage may also be referred to as a second protection voltage. With an end-of-charge voltage of 12,3V, a second protection voltage of 12,43V gives a voltage window of 130mV.

When charging a lithium battery in a maximum protection circuit voltage mode, the charging current may decrease when the charging process proceeds from the point in time at which the maximum protection circuit voltage is reached. Thus, the voltage drop of the internal resistance 12a, 12b, 12c of the battery cells will decrease with the charging current, and it is preferred that the protection circuit voltage control mode is followed by other charge control mechanisms in order to avoid overcharging of the battery, which may occur if the battery cells are charged to a higher voltage than the end-of-charge voltage.

It is therefore preferred to have embodiments according to the present invention which comprises measuring the open circuit battery voltage as described above during periods in which the switch 49 is in an off position, which allows an internal at least substantially resistance free detection of the battery voltage. In case a protection diode is comprised within the battery pack the detected voltage should be corrected for the voltage drop across this diode.

In a preferred embodiment charging in the protection circuit voltage control mode is terminated when the measured open circuit voltage reaches the end-of-charge voltage corrected for the diode voltage drop, which for the described embodiment corresponds to the open circuit voltage reaching about 12,3V + 0,2V, which equals about 12,5V. When this open circuit voltage has been reached, it is preferred to further charge the battery by controlling the charging process so as to keep the open circuit voltage below this corrected end-of-charge voltage.

The charging method and apparatus according to the present invention has been used for charging 2 different size lithium-ion type batteries, each having 3 cells and the above described threshold voltage and end-of-charge voltage. The first battery has a nominal capacity of 1300mAh and the second battery has a nominal capacity of 2600mAh. The first battery is first charged in an almost constant current mode with a maximum charging current of 1,2A, while the second battery is first charged with a maximum charging current of 2A. During the charging process the charging voltage, the protection circuit voltage and the open-circuit voltage are determined, and the almost constant current charging mode is terminated when either the charging voltage reaches the first protection voltage, the protection circuit voltage reaches the second protection voltage, or the open circuit voltage reaches the end-of-charge voltage, from which point in time the charging process is controlled as described above, ending by charging the battery in an open circuit voltage or resistance free battery voltage control mode, in which the resistance free battery voltage is kept substantially at the end of charge voltage.

Here, it should be noted that when a charging process according to the present invention comprises both a charging voltage control mode and a protection circuit voltage control mode, the maximum charging voltage or the first protection voltage may be set at a higher value than for processes which do not include the protection circuit voltage control mode. Actually, the maximum charging voltage may be set so high as not to influence the charging process but merely act as a safety voltage. However, when charging with high charging currents it may be an advantage to use a maximum charging voltage which will influence the charging process in order not to dissipate too much power in the terminals and contacts of the battery and the charger.

The open circuit voltage control mode is terminated when the charging current has decreased to a predetermined value in the range of 60mA for the first battery and 1 20mA for the second battery. However, other values for the end-of-charge current may be used. A more detailed description of the charging processes will be given below.

In the above discussion of the measurement of the protection circuit voltage by use of the voltage detection circuit 70, the accuracy or tolerance of the voltage measurement of circuit 70 has not been discussed. For the bq2050, the voltage is measured with a minimum resolution about 56,25mV. However, the reading of the voltage may be given with a variation of about ± 60mV/cell, resulting in a maximum error or deviation in the reading of the battery voltage of ± 180mV. Thus, in order to read the protection circuit voltage with an acceptable tolerance, the reading of the voltage detection circuit 70 needs to be calibrated before charging the battery in a protection circuit voltage control mode. A description of such a calibration process will be given below.

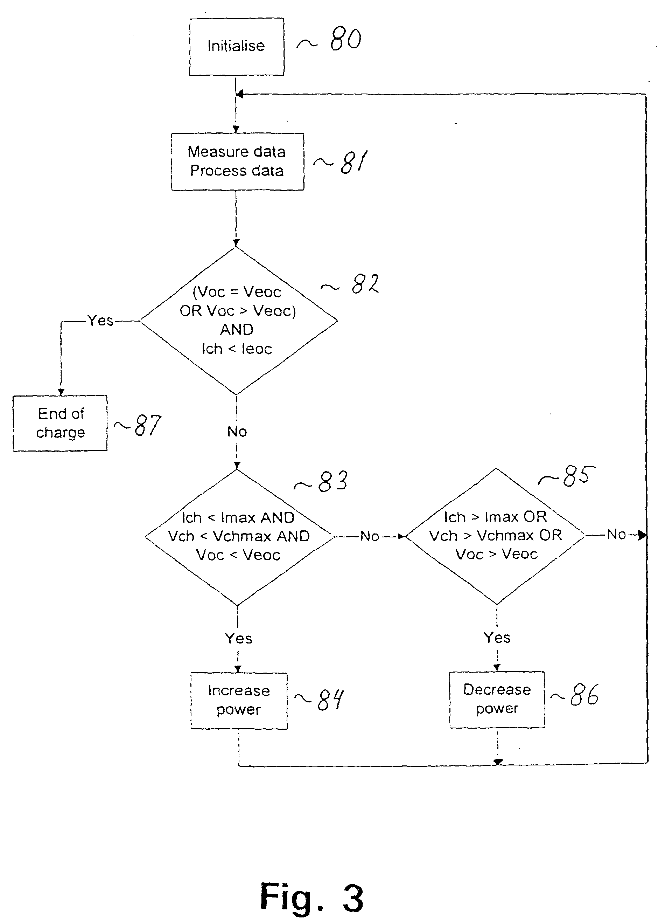

Different embodiments of charging processes according to one or more of the different aspects of the present invention will now be discussed in connection with Figs. 3-8.

Referring now to Fig. 3, a flow chart is illustrated which starts at an initial step 80 and proceeds to process step 81. Step 80 is indicative of connection of the battery pack 10 to the charger 40 and initialising the micro controller 45. During the initialising process 80, the micro controller 45 may read a battery identifier via the communication interface line 53, which identifier may be used as a reference for addressing battery specific predetermined charging parameters stored in the micro controller 45. These parameters may comprise the maximum charging current Imax, the maximum charging voltage Vchmax, the maximum protection circuit voltage Vpcmax, the end-of-charge voltage Veoc and/or the end-of-charge current Ieoc. It should be noted that for batteries having a protection diode, Veoc should be corrected for the voltage drop across this diode giving a maximum open circuit voltage Vocmax to be stored in the micro controller 45. However, these parameters need not to be pre-stored within the controller 45, but may be pre-stored in the battery and communicated to the micro controller 45.

For the process of fig. 3, the value of Vchmax may be determined as previously described to ensure a high charging power. Thus, Vchmax is larger than Veoc but small enough to avoid interrupting by the protection circuit.

After initiation at step 80, the charging process is started at step 81. Here, the charging process is started with a predetermined low charging current, and the charging process is controlled based on measured values of the charging current Ich, the charging voltage Vch and the open circuit voltage or at least substantially resistance free battery voltage Voc. Thus, at step 81, data are measured and processed in order to determine the present values of Ich, Vch and Voc. When the charging process has just started, the voltage Voc is below Veoc, and the answer at decision step 82 is no leading to decision step 83. Again, at the beginning of the charging process Ich < Imax, Vch < Vchmax and Voc < Veoc, and the answer to step 83 is yes leading to process step 84. At step 84, the charging power is increased, which may be effected by increasing the duty cycle of the PWM signal 50.

Preferably, the measurement of data at step 81 is performed within time frames or measurement periods at regularly time intervals, having the charging current Ich and the charging voltage Vch measured when the full charging current is supplied, i.e. the power supply switch 49 is on, whereas the open circuit voltage Voc is measured when the charging current is interrupted or reduced by having the switch 49 in its off position. Thus, the charging power may be regulated at time intervals corresponding to the time intervals between successive periods of measurement of data.

During the first phase of the charging process, the loop in Fig. 3 follows steps 81, 82, 83 and 84, whereby the charging power is increased until Ich reaches Imax, at which point in time, step 83 leads to decision step 85. If neither Vch or Voc has reached their corresponding limits Vchmax and Veoc, the output of step 85 is no and the charging power is maintained by following the loop 81, 82, 83 and 85. However, if Ich is measured to be larger than Imax, the charging power is decreased at process step 86 by decreasing the duty cycle of PWM signal 50. The result is that when Ich has reached Imax, the charging process is controlled so as to charge in a constant charging current mode until either Vch or Voc reaches their limit.

During a normal charging process, the charging voltage Vch will be the first to reach its limit Vchmax. At this point in time the loop goes from step 83 to steps 85 and 86 to thereby decrease the charging power. At this point in time the charging process enters a constant charging voltage mode in which Vch is hold substantially constant while the charging current Ich is reduced. This corresponds to the loop of steps 81, 82 83, 85 and 86, or, for periods where the there is no need for decreasing the power, the loop of steps 81, 82, 83 and 85.

In Fig. 3, the value of Vchmax is set to be larger than the value of Veoc, and the constant charging voltage mode is maintained until Voc reaches Veoc. At this point in time the charging process enters a resistance free or open circuit voltage control mode, corresponding to loop 81, 82, 83, 85 and 86, or, when no decrease in power is needed, loop 81, 82, 83 and 85. The open circuit voltage control mode is maintained until the charging current has been decreased to the end-of-charge current Ieoc. At this point in time the answer at decision step 82 is yes leading to a termination of the charging process at process step 87.

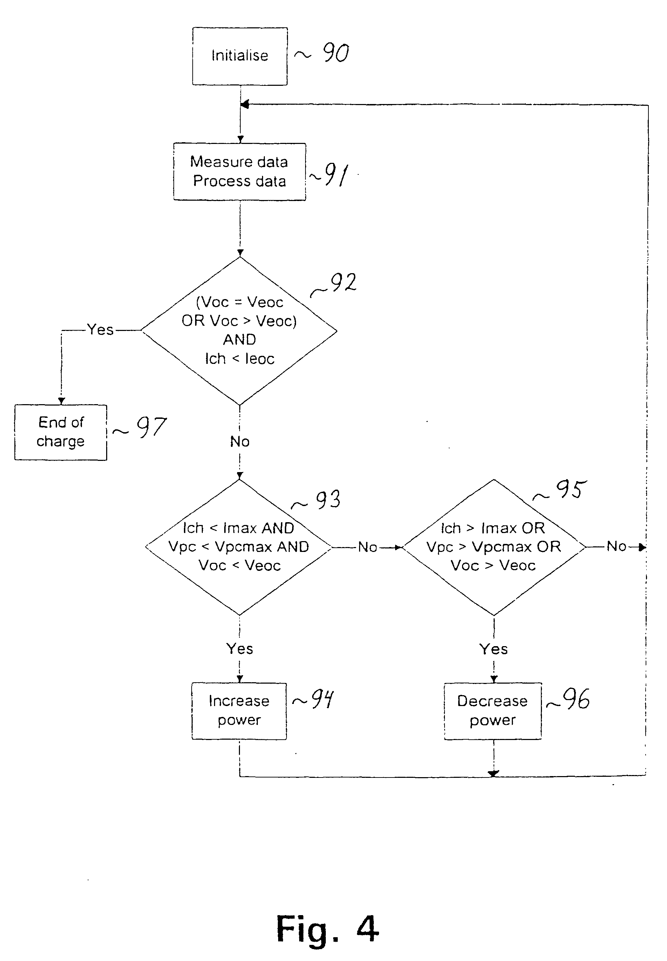

Another embodiment of a charging process according to the present invention can be obtained by having Vch and Vchmax of Fig. 3 replaced by the protection circuit voltage Vpc and the maximum protection circuit voltage Vpcmax, respectively. Thus, the constant charging voltage mode is replaced by a constant protection circuit voltage mode until Voc reaches Veoc. This is illustrated in Fig. 4 in which the value of Vpcmax is set to be below the threshold voltage of the protection circuit but higher than the end-of-charge voltage Veoc, thereby allowing a higher charging power during the constant protection circuit voltage control mode when compared to a normal charging process in which the charging voltage is not allowed to be higher than the end-of-charge voltage Veoc. In Fig. 4 the steps 90-97 correspond to steps 80-87 of Fig. 3

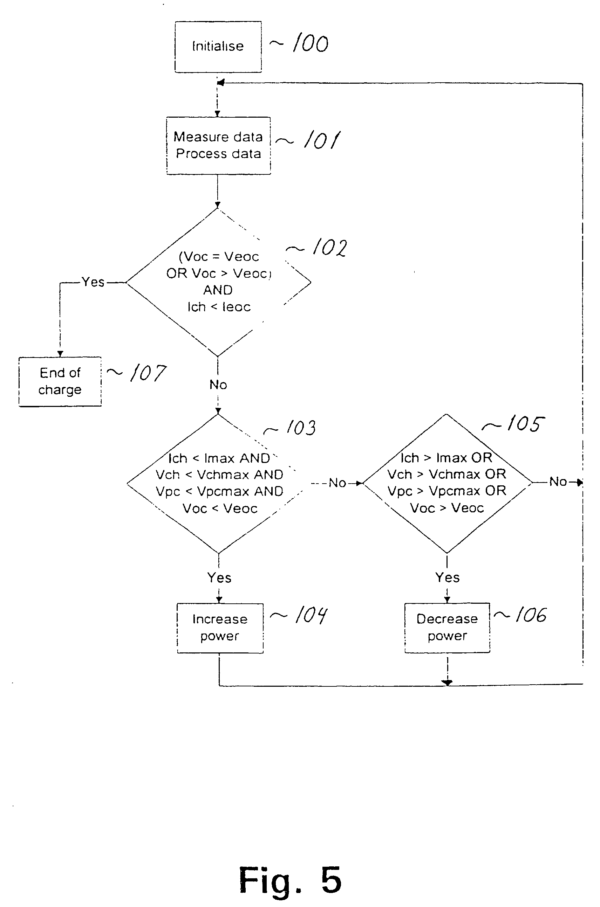

In Fig. 5 is shown a flow chart of a charging process corresponding to a combination of the charging processes of Figs. 3 and 4. Thus, steps 100-107 of Fig. 5 correspond to the steps 80-87 of Fig. 3, with the difference being that process step 101 includes measurement of data comprising the protection circuit voltage Vpc, and decision steps 103 and 105 include Vpc being compared to the maximum allowed protection circuit voltage Vpcmax. It is preferred that the values of Vchmax and Vpcmax have been determined so that Vchmax is reached before Vpcmax. Thus, when Vchmax is reached, the charging current is reduced leading to a decreased terminal voltage drop while the resistance free battery voltage is increased, leading to an increase in the voltage at the protection circuit Vpc. Hence, when charging in a constant charging voltage mode, the value of Vpc increases until Vpcmax is reached.

Here, Vchmax is included as a safety voltage. The use of Vpcmax may ensure that the protection circuit is not triggered, but high ohmic resistances or bad connections in the terminals may introduce high voltage drops and a corresponding high power loss across the terminals. In order to reduce such power loss, which might damage the terminals, Vchmax may be determined as discussed above in order to include the charging voltage control mode.

Following the discussion of Fig. 3, the charging process of Fig. 5 will first have the charging power increased until Imax is reached, followed by a constant current charging mode until Vch reaches Vchmax. Here, the charging process enters the constant charging voltage control mode, which is followed until Vpc reaches Vpcmax, from which point in time the charging power may be further decreased in order to follow a constant protection circuit voltage control mode which is followed until Voc reaches Veoc. At this point in time the charging power may be decreased further to follow the open circuit voltage control mode until Ich reaches Ieoc at step 102 leading to termination of the charging process at step 107.

For the charging processes of Figs. 3-5 the charging parameters needed for controlling the charging process Ich, Vch, Vpc and/or Voc may be measured at regularly time intervals. The duration of such time intervals could be 32 milliseconds, but is should be understood that much longer time intervals could be used in accordance with the present invention. Thus, time intervals up to several seconds might be used depending on the measurement technique used. Each parameter may be measured within a time frame which is much shorter than the above mentioned time interval. Such a time frame could be 0,1-1 milliseconds, but again time frames of a longer duration could be used, as long as the sum of the total number of time frames does not exceed the measurement time intervals.

For the process of Fig. 3, the charging current Ich may be measured within a time frame of about 0,1 milliseconds followed by a time frame of 0,1milliseconds for measuring Vch, which again may be followed by a time frame of 0,1milliseconds in which the switch 49 is in the off position for measuring Voc. For the process of Fig. 4 the measurement of Vch should be replaced by a measurement of Vpc. Here, a longer time frame for measuring Vpc may be needed in order to read the voltage via the communication line. However, Vpc may also be measured directly by use of an A/D converter allowing a faster measurement. For the process of Fig. 5, measurement time-slots may be included for both Vch and Vpc.

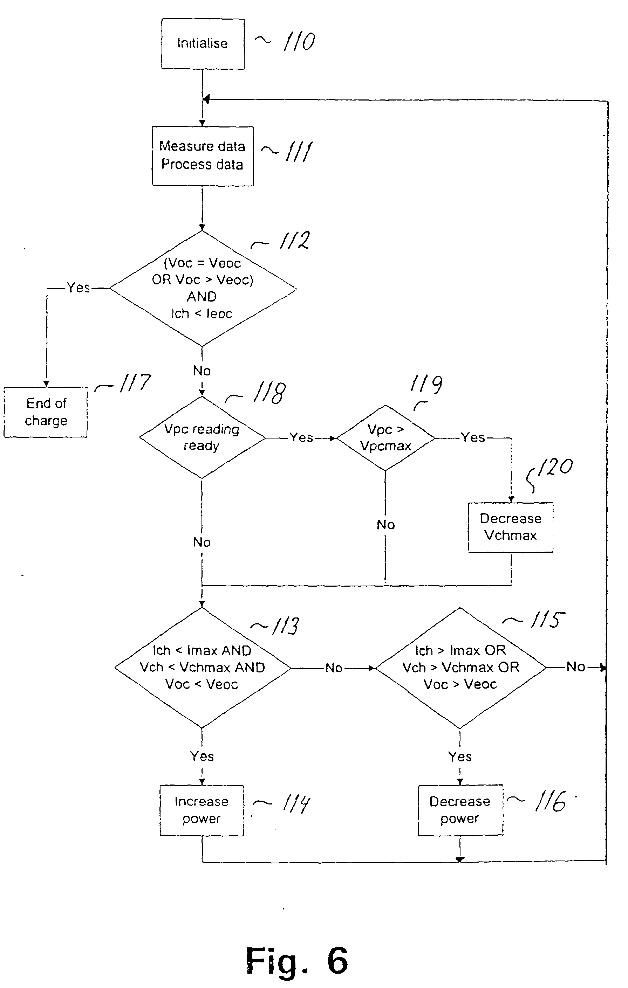

Fig. 6 shows a flow chart of a charging process corresponding to the charging process of Fig. 5. However, for the process of Fig. 6 the reading or measuring of the protection circuit voltage Vpc is performed at time intervals different to the time intervals between measurements of Ich, Vch and Voc, which are measured at time intervals as described in connection with Fig. 3. Thus, the time intervals between readings of Vpc in Fig. 6 may be anything higher than the time intervals of Fig. 3 up to several seconds. In an embodiment of the present invention the reading of Vpc is performed at time intervals of 30 seconds.

In Fig. 6 the steps 110-117 correspond to steps 80-87 of Fig. 3, while steps 118-120 include protection circuit voltage reading and control. It should be noted that the values of Vchmax and Vpcmax have been determined in accordance with the discussion of Fig. 5. Thus, when charging a fully discharged battery, Vchmax should be reached before Vpcmax is reached.

In accordance with the discussion of Fig. 3, the charging process of Fig. 6 will first have the charging power increased until Imax is reached, followed by a constant current charging mode until Vch reaches Vchmax, at which point in time the charging process enters the constant charging voltage control mode. At decision step 118 it is determined if a Vpc reading is ready, and if no, the normal charging process proceeds at step 113, while if yes, it is determined at decision step 119 whether Vpc has reached Vpcmax or not. If no, then back to step 113, while if yes, then at process step 120 the predetermined value of Vchmax is decreased before entering step 113. When Vchmax has been decreased at step 120, the answer to step 113 is no, leading to a decrease in charging power via steps 115 and 116. Thus, when Vpc has reached Vpcmax, the charging process enters a constant protection circuit voltage mode in which the maximum charging voltage Vchmax and thereby the charging voltage Vch is adjusted so as to maintain the protection circuit voltage at Vpcmax for part of the charging process.

In the charging process of Fig. 6, the constant protection circuit voltage control mode may be followed until Voc reaches Veoc. At this point in time the charging power may be decreased further to follow the open circuit voltage control mode until Ich reaches Ieoc at step 112 leading to termination of the charging process at step 117.

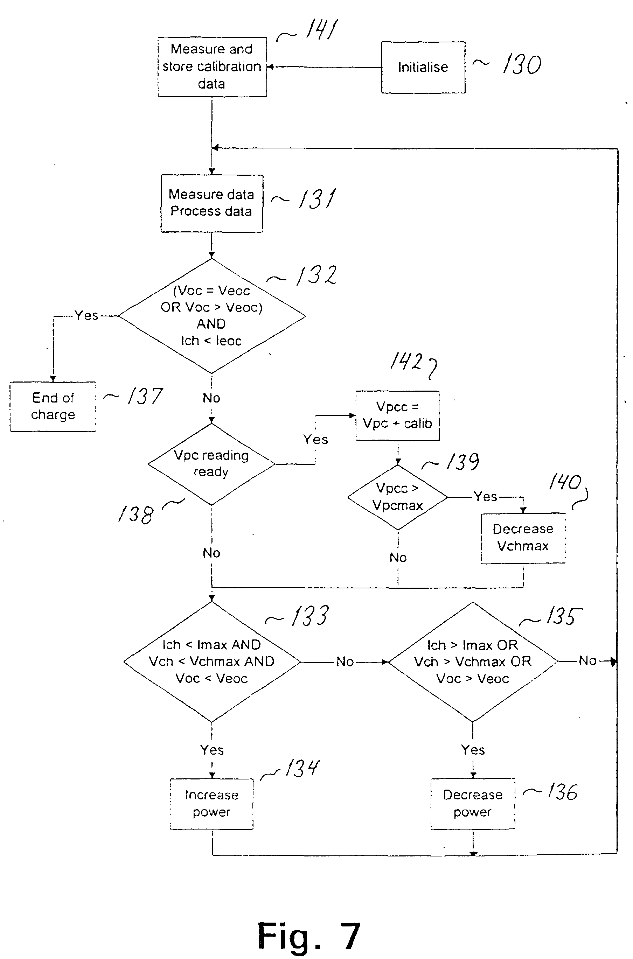

It has been discussed above that the reading of the protection circuit voltage might need to be calibrated. This is illustrated in Fig. 7 which shows a flow chart for a charging process corresponding to the charging process of Fig. 6, but further including steps of calibration 141 and 142. In Fig. 7, the steps 130-140 correspond to steps 110-120 of Fig. 6, however, in Fig. 7, the step of initiation 130 is followed by process step 141, which comprises the process of measuring and storing a calibration or correction value, calib, before entering the charging loop at step 131. When a Vpc reading is ready at decision step 138, the stored correction value, calib, is added to Vpc in order to obtain a corrected protection circuit voltage Vpcc at process step 142. The determined value of Vpcc is compared to Vpcmax at decision step 139 in order to determine whether Vchmax should be decreased or not.

Hence, for the process of Fig. 7, the constant protection circuit voltage mode is controlled so as to maintain the corrected protection circuit voltage Vpcc at Vpcmax during part of the charging process. When decreasing Vchmax at step 140, it is preferred that the new value of Vchmax is determined as the old value of Vchmax minus the difference of Vpcc and Vpcmax.

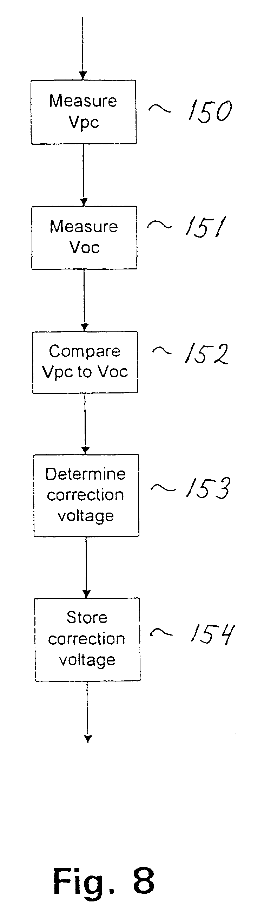

The calibration step 141 of the process of Fig. 7 is shown in greater details in Fig. 8. Here, the calibration process comprises a process step 150 for measuring and/or reading the protection circuit voltage Vpc, corresponding to determining the voltage output of the protection circuit. This is followed by process step 151 in which the open circuit voltage, or the at least substantially resistance free voltage of the battery Voc is measured, followed by process step 152 in which the obtained values of Vpc and Voc are compared in order to determine the voltage difference. In process step 153 the resulting voltage correction value, calib, is determined based on the obtained voltage difference at step 152 and a predetermined voltage drop across the battery pack protection diode. If no protection diode is present, the voltage correction value equals the result of step 152. Finally, in process step 154, the correction voltage, calib, is stored for further use during the charging process.

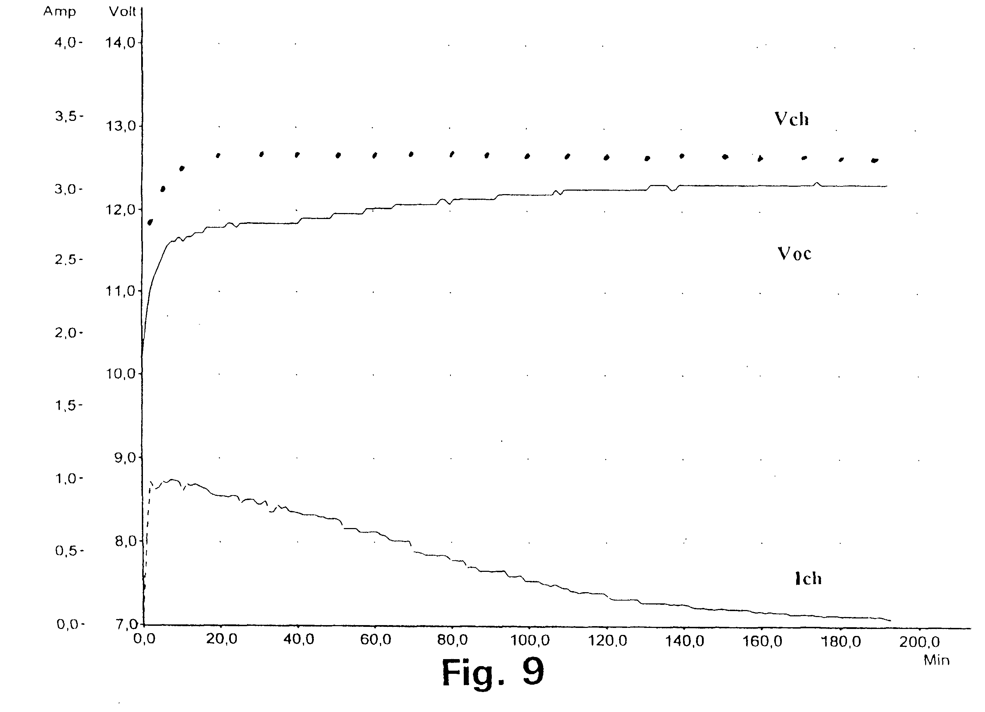

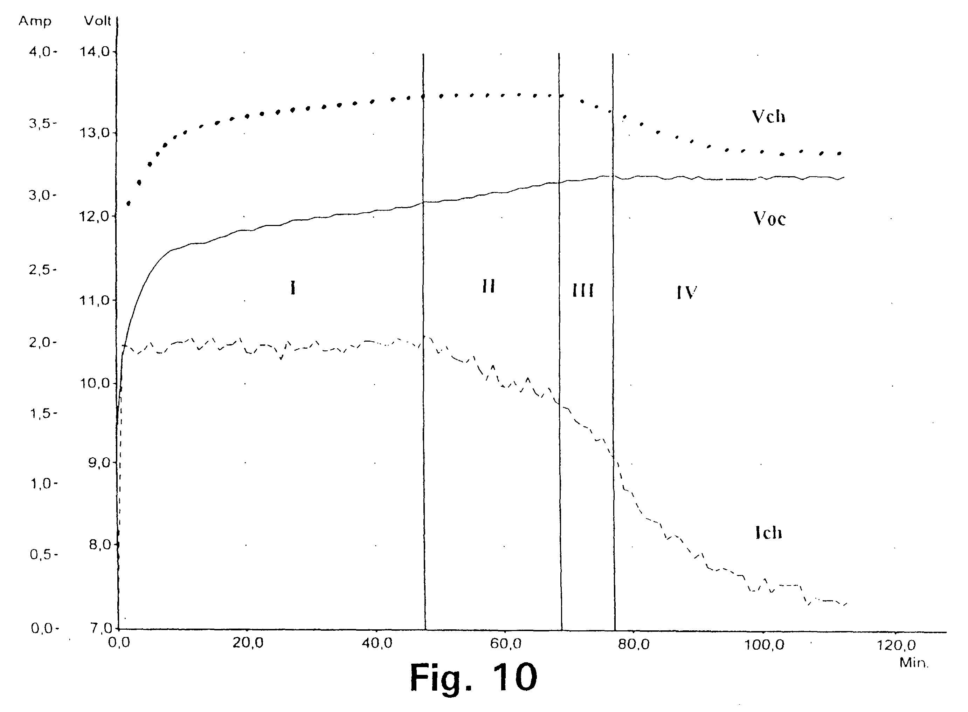

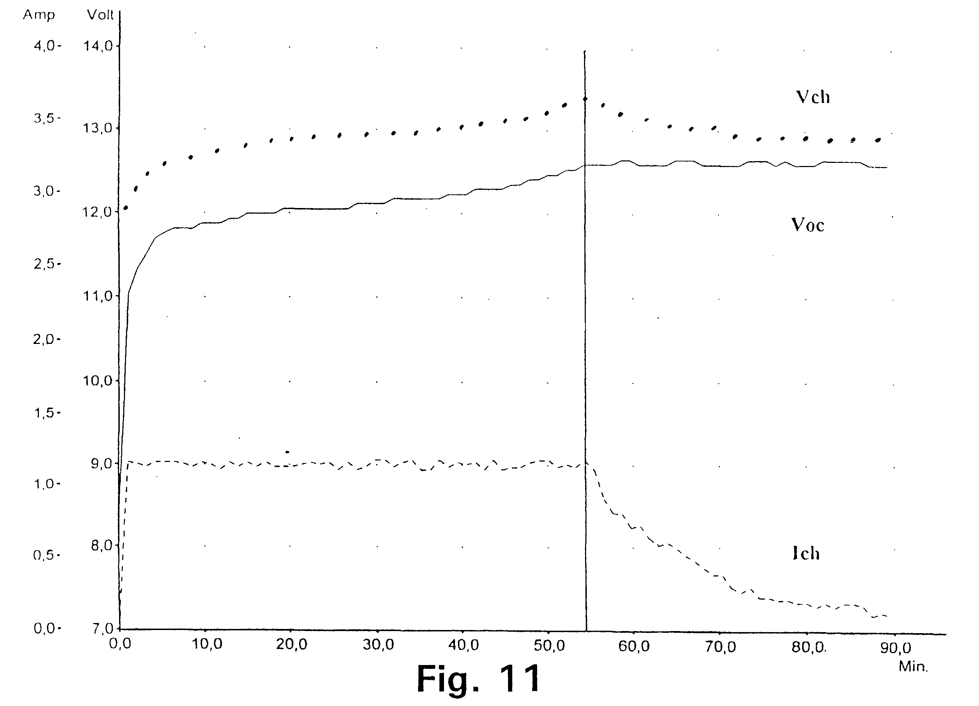

Referring now to Fig. 9 which shows a known charging process. The battery of Fig. 9 is a fully discharged 1 300mAh lithium-ion battery with 3 cells and an end-of-charge voltage Veoc of 12,3V. However, the battery pack comprises a protection diode having a voltage drop which has been set to 300mV, which should be taken into account when charging the battery. In Fig. 9 and the following figures, Figs. 10 and 11, the punctuated waveforms represent the measured charging voltage Vch, the solid lines represent the measured open circuit voltage Voc, and the dashed waveforms represent the measured charging current Ich.

The charging process of Fig. 9 comprises a constant current mode having a maximum charging current Imax of 1A, followed by a constant charging voltage mode having a maximum charging voltage Vchmax of 12,66V taken into account the diode voltage drop. The charging process is terminated in the constant charging voltage mode when the charging current has decreased to about 60mV. From Fig. 9 it is seen that within about 15 minutes the charging voltage has increased to about 12,66V, whit the result that the constant current charging mode is very short and ended after 15 minutes of charging at which point in time the constant charging voltage mode is entered. Thus, in order to maintain the constant charging voltage, the charging current is decreased at an early stage of the charging process, resulting in a rather long charging time of about 190 minutes. For batteries having larger capacity than 1300mAh, the charging time will be much longer when following the known charging process illustrated in Fig. 9. When terminating the charging process of Fig. 9, the open circuit voltage has reached about 12,42V, indicating that the end-of-charge voltage is a little lower than 12,3V when taking into account the protection diode voltage drop.

The battery pack of Fig. 9 also comprises a protection circuit having a threshold voltage of 1 2,6V. The protection circuit 60 is arranged within the battery pack as illustrated in Fig. 2. From the curves of Fig. 9 it is seen that Vchmax has been set so low when taken into account the diode voltage drop that the protection circuit voltage should never reach the threshold voltage of 12,6V.

A charging method according to the present invention as described in the flow charts of Figs. 5-7 is illustrated in Fig. 10. The battery of Fig. 10 is a fully discharged 2600mAh 3 cells lithium-ion battery having and end-of-charge voltage Veoc of 12,3V. The battery pack correspond to the battery pack 10 of Fig. 2 and thus comprises a protection diode 13, a protection circuit 60 and a circuit 70 for measuring the protection circuit voltage.

During the upstart of the charging process, the circuit 70 for measuring the protection circuit voltage is calibrated, from which point in time the charging current is increased and the charging process enters the constant current charging mode, phase I of Fig. 10, having the maximum charging current Imax set to 2A. During the charging process, the values of ich, Vch, Voc and Vpc are determined. For the charging process of Fig. 10, the maximum charging voltage Vchmax has been set to 13,41 V, and this value has been determined by test charging the battery at 2A for different voltages up to the point, where the protection circuit 60 interrupts the charging process. The resulting Vchmax has thus been set at a lower value. If variations in the threshold values of different charging circuit should be taken into account, Vchmax might be set at a lower value as discussed previously. By using such a high value of Vchmax, the 2A charging current is allowed for a long time period up to about 47 minutes, at which point in time the charging voltage reaches Vchmax, and the charging process enters the constant charging voltage mode, phase II of Fig. 10.

For the charging process of Fig. 10, the maximum open circuit voltage Vocmax has been set at 12,48V, corresponding to the end-of-charge voltage Veoc of 12,3V adjusted for the protection diode voltage drop about 200mV. Furthermore, the value of the maximum allowed protection circuit voltage Vpcmax has been set at 12,43V as previously discussed. During the charging phase II the charging current is decreased in order to maintain a constant charging voltage, while the battery open circuit voltage is increased. At a point in time, which in Fig. 10 is about 67 minutes within the charging process, the battery voltage has increased so much that the protection circuit voltage reaches Vpcmax. It this preferred embodiment of the invention it is the corrected value Vpcc which should reach Vpcmax. At this point in time, the charging process enters the constant protection circuit voltage mode, phase III of Fig. 10. During phase III the output of the power supply is controlled so as to reduce both the charging current and the charging voltage in order to maintain the protection circuit voltage at Vpcmax.

When the battery voltage has increased so much that Voc reaches Vocmax, the charging process enters the constant resistance free voltage control mode or constant open circuit voltage mode, phase IV of Fig. 10, around 76 minutes within the charging process. Phase IV of the charging process proceeds until the charging current has decreased to the predetermined end-of-charge current leoc of 120mA, at which point in time the charging process is finally terminated. From Fig. 10 it is seen that the total charging time is around 113 minutes which is very much shorter than what could be obtained by the prior art technique of Fig. 9. When terminating the charging process there is a difference about 240-300mV between Vch and Voc. This difference is due to the voltage drops of the loss resistors discussed above and a difference in the protection diode voltage drop.

Fig. 11 illustrates a charging process for a fully discharged 1300mAh 3 cell lithium-ion battery. The charging process is performed by the charger used for the charging process of Fig. 10. However, the maximum charging current Imax has been reduced to 1,2A due to the lower capacity of the battery and the end-of-charge current leoc has been reduced to 60mA. The other stored charging parameters have the same value as for the process of Fig. 10. Thus for Veoc equal to 12,3V the value of Vocmax is set to 12,48V, Vchmax is 13,41V and Vpcmax is 12,43V. From Fig. 11 it can be seen that due to the lower maximum charging current, the charging process never enters phases III and IV of Fig. 10. Thus, after the steps of initiation and storing of calibration voltage, the constant charging current mode is followed for about 55 minutes until Voc reaches Vocmax, from which point in time the charging process follows the constant resistance free voltage control mode or constant open circuit voltage mode. The constant open circuit voltage mode is followed until the charging current gets below leoc and the charging process is terminated after about 89 minutes of charging time.

When ending the constant charging current mode in Fig. 11, the charging voltage has a value of 13,38V which is very close to Vchmax. Thus, for a slightly higher Imax, the charging process should also comprise a constant charging voltage mode and a constant protection circuit mode. This would also have been the case if a lower value had been chosen for Vocmax.

However, when comparing the charging process of Fig. 11, in which the end-of-charge voltage is compared to the open circuit voltage during the charging process, with the charging process of Fig. 9, in which the end-of-charge voltage is compared to the charging voltage, the overall charging time has been reduced to about 50% of the charging time shown in Fig. 9.

Thus, it should be understood that the present invention provides a solution to quickly charge batteries having a protection circuit without having the charging process interrupted by such protection circuit.

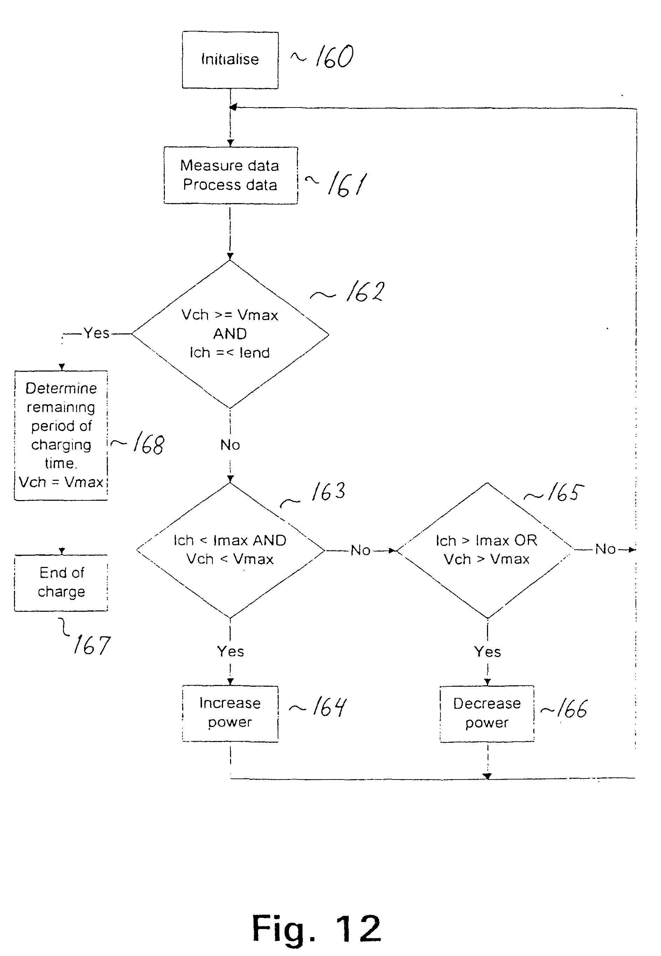

A flow chart illustrating a charging process according to an embodiment of the fourth aspect of the present invention is shown in Fig. 12.

The charging process of Fig. 12 shows a simple charging process which can be performed using a battery charger as illustrated in Fig. 1. However, since the charging process of Fig. 12 only requires measurement of the charging voltage Vch and the charging current Ich there is no need for the battery supervisor circuit 20, the communication interface and the communication line 53. Furthermore, the relevant predetermined charging parameters may be stored in the micro controller 45. These parameters may comprise the maximum charging current Imax, the maximum charging voltage Vmax, which preferably should equal the end-of-charge voltage Veoc or be a function of this voltage, one or more remaining periods of charging time, and the current value lend, which is the value that the charging current should be decreased to before determining a remaining period of charging time.

Here, the stored remaining periods of charging time may be determined from test charging the battery in a charging process, where the battery is charged in a constant current mode followed by a constant voltage mode until the charging current has decreased to an end of charge current leoc of 5-10% of the maximum current in the constant current charging mode. The period of time from lend is reached to leoc is reached may then be determined as the remaining period of charging time.

In Fig. 12 the flow chart starts at an initial step 160 and proceeds to process step 161. Step 160 is indicative of connection of the battery pack 10 to the charger 40 and initialising the micro controller 45. If the charger 40 is to be used for different battery types and/or sizes, the battery may comprise a circuit for communicating battery information via a communication interface line 53 to the micro controller 45. Thus, during the initialising process 160, the micro controller 45 may read a battery identifier from the battery, which identifier may be used as a reference for addressing battery specific predetermined charging parameters stored in the micro controller 45. However, these parameters need not to be stored within the charger 40 or controller 45, but may be pre-stored in the battery and communicated to the micro controller 45.

After initiation at step 160, the charging process is started at step 161. Here, the charging process is started with a low charging current, and the charging process is controlled based on measured values of the charging current Ich and the charging voltage Vch. Thus, at step 161, data are measured and processed in order to determine the present values of Ich and Vch. When the charging process has just started, the voltage Vch is below Vmax, and the answer at decision step 162 is no leading to decision step 163. Again, at the beginning of the charging process Ich < Imax, Vch < Vmax, and the answer to step 163 is yes leading to process step 164. At step 164, the charging power is increased, which may be effected by increasing the duty cycle of the PWM signal 50.

During the first phase of the charging process, the loop in Fig. 12 follows steps 161, 162, 163 and 164, whereby the charging power is increased until Ich reaches Imax, at which point in time, step 163 leads to decision step 165. If Vch has not yet reached the limit Vmax, the output of step 165 is no and the charging power is maintained by following the loop 161, 162, 163 and 165. However, if Ich is measured to be larger than Imax, the charging power is decreased at process step 166 by decreasing the duty cycle of PWM signal 50. The result is that when Ich has reached Imax, the charging process is controlled so as to charge in a constant charging current mode until Vch reaches the limit.

When Vch reaches Vmax the loop goes from step 163 to steps 165 and 166 to thereby decrease the charging power. At this point in time the charging process enters a constant charging voltage mode in which Vch is hold substantially constant while the charging current Ich is reduced. This corresponds to the loop of steps 161, 162, 163, 165 and 166, or, for periods where there is no need for decreasing the power, the loop of steps 161, 162, 163 and 165.

When the charging current Ich has decreased to Iend, the answer to decision step 162 is yes, and process step 168 is entered. At step 168 the remaining period of charging time corresponding to the value of Iend is determined, and the charging process proceeds in the constant charging voltage mode for this determined period until end of charge at step 167.

Other embodiments of charging processes according to the present invention can be obtained by having Ieoc of Figs. 3-7 replaced by Iend arid a process step corresponding to step 168 inserted before the end of charge step.

The flow charts of Figs. 3-7 and Fig. 12 do not show any determination or reading of the battery temperature. However, it is within the scope of the present invention to further include one or more steps of determining and/or reading the battery temperature. By determining the battery temperature, which might be measured by the circuit 70 within the battery and transferred to the micro controller 45 of the battery charger 40, the charging process may be stopped if the battery temperature gets above a predetermined limit, for example above 45°C or above 50°C. The micro controller 45 may also be adapted so as not to start the charging process for low battery temperatures, for example below 0°C. For such low temperatures the charger may be adapted to supply a low trickle charge current of for example 50mA.

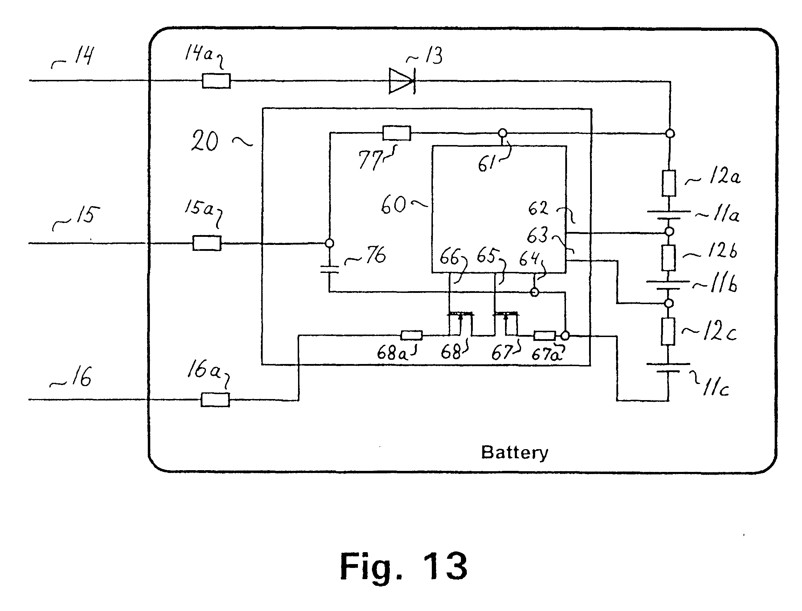

Another preferred embodiment of a battery pack 10 having a supervisor circuit 20 is illustrated in Fig. 13. The supervisor circuit 20 of Fig. 13 is more simple compared to the supervisor circuit 20 of Fig. 2. Thus, in the embodiment of Fig. 13, the supervisor circuit does not comprise any gas gauge circuitry 70 for measuring the protection circuit voltage and the current sense resistor 74 is also omitted. In stead the supervisor circuit 20 of Fig. 13 comprise a simple RC stage having a resistor 77 and a capacitor 76. Preferably, the resistor 77 and the capacitor 76 is directly connected across the cell terminals with the result that the voltage of the capacitor 76 substantially equals the voltage across the battery cell or cells. The other components of the battery pack 10 in Fig. 13 correspond to the components of the battery pack 10 in Fig. 2.

The values of the resistor 77 and the capacitor 76 should preferably be set so high that the voltage of the capacitor 76 is not changed significantly in periods where the charging current may be cut off in order to measure Voc. Thus, by measuring the voltage of the capacitor 76, the cell terminal voltage corresponding to the protection circuit voltage can be measured. The voltage may be measured at pin 15 during measurement periods in which the charging current is interrupted, with the measured voltage representing the voltage for periods of non-interrupted supply of charging current. The protection circuit voltage may also be measured at pin 15 when the battery is being charged by the charging current. When using the RC stage of Fig. 13, there is no need for data communication along line 53 to the micro controller 45. Here the micro controller 45 may be adapted to measure the voltage at battery terminal 15, for example by use of an A/D converter having its input via line 53. As an alternative, the voltage signal from battery terminal 1 5 may be fed to the signal conditioning circuitry 55, from where the voltage signal goes through a connection line to the micro controller 45.

If there is a need to save the extra battery terminal 15, the voltage of the capacitor 76 may be sensed by the charger 40 via battery terminal 14 by having specially designed circuitry, which feeds the voltage of capacitor 76 to terminal 14 during periods when the supply of charging current is interrupted.

It should be noticed that the RC stage 77, 76 of Fig. 13 also could be used for batteries without protection circuit when there is a need for measuring the internal battery cell voltage corresponding to the cell voltage during the supply of a charging current. The voltage of the capacitor 76 may be measured as described above.

It is to be understood that the present invention also covers a simple embodiment of a battery pack 10, in which the resistor 77 and the capacitor 76 of Fig. 13 are omitted, and the battery terminal 15 is directly connected to the positive side of the battery cell or cells 11a. Thus, the internal cell voltage or the protection circuit voltage may be measured across battery terminals 15 and 16. Alternatively, an extra battery terminal may be directly connected to the negative side of the battery cell or cells 11c in order to avoid the voltage drop caused by the protection circuit switches 67 and 68. When no protection circuit 60 is arranged within the battery pack, terminal 16 may be directly connected to the negative side of the battery cell or cells 11c.

The battery packs of Figs. 1, 2 and 13 all comprise a supervisor circuit 20 having a protection circuit 60, and for the person skilled in the art it should be obvious that the fifth aspect of the present invention covers embodiments which could be operated by a battery charger corresponding to the charger 40 of Fig. 1 and for batteries according to the battery packs 10 of Figs. 1, 2 and 13. However, according to the embodiments of the fifth aspect of the invention there is no need for a protection circuit 60, so this aspect of the invention would also work for battery packs without the protection circuit 60 of Figs. 2 and 13.

It should be understood that the flow charts of Figs. 3-6 and the charging process of Fig. 10 also illustrate charging processes according to the fifth aspect of the invention if Vch is equal to the external battery terminal voltage, Vchmax is replaced with the external safety voltage, Vpc is replaced with the internal cell voltage and Vpcmax is replaced with the internal safety voltage.

According to the sixth aspect of the present invention the battery to be charged comprises memory means which preferably may be electronic memory means, such as ROM, EEPROM, and EPROM. Such an electronic memory may be part of the supervisor circuit 20 of the battery packs of Figs. 1, 2 or 13, but the electronic memory means may also be part of a battery pack without a supervisor circuit 20 and/or protection circuit 60. For the person skilled in the art it should be obvious that the sixth aspect of the present invention covers embodiments which could be operated by a battery charger corresponding to the charger 40 of Fig. 1. Thus, the stored battery information may be communicated to the charge controller 45 via the communication line 53. However, the present invention also covers embodiments using a communication bus having two or more lines for communicating data from the battery to the charger.

It should be understood that the battery and the charging system according to the sixth embodiment of the invention also may cover embodiments comprising a so-called Smart Battery and/or a Smart Battery Charger. The Smart Battery and the Smart Battery Charger may preferably be configured to communicate with each other via a so-called System Management Bus (SMBus).

The foregoing description of preferred exemplary embodiments of the invention has been presented for the purposes of illustration and description. It is not intended to be exhaustive or to limit the invention to the precise form disclosed, and obviously many modifications and variations are possible in light of the present invention to those skilled in the art.

**Claims**

1. A battery (10) comprising
   at least one rechargeable battery cell (11a, 11b, 11c) and information means for storing battery information indicative of at least a first and a second charging voltage parameter, said battery information having a form which may be read or sensed by information receiving means of a corresponding battery charger,
   **characterised in that** the first and second charging voltage parameters represent predetermined maximum charging voltage levels.

2. A battery according to claim 1, wherein the first charging voltage parameter is indicative of a higher voltage level than indicated by the second voltage charging parameter.

3. A battery according to claims 1 or 2, wherein the second charging voltage parameter indicates a second voltage level substantially equal to a predetermined maximum end-of-charge voltage.

4. A battery according to any of the claims 1-3, wherein
   the first charging voltage parameter indicates a first voltage level substantially equal to a predetermined maximum external charging or safety voltage.

5. A battery according to any of claims 1-3, wherein
   the first charging voltage parameter indicates a first voltage level substantially equal to a predetermined maximum internal charging or safety voltage.

6. A battery according to any of the claims 1-5, wherein
   the battery further comprises a protection circuit (60) for interrupting charging when the voltage applied to the protection circuit reaches a predetermined threshold voltage, and the first charging voltage parameter indicates a first voltage level substantially equal to a predetermined maximum protection circuit charging voltage.

7. A battery according to any of the claims 1-6, wherein the information means for storing the battery information comprises one or more resistors.

8. A battery according to any of the claims 1-7, wherein the information means for storing the battery information comprises one or more electronic memories, which may be selected from the group consisting of non-volatile ROM, EEPROM, EPROM, and any combination thereof.

9. A battery according to claim 8, wherein the battery information is pre-stored in the electronic memory.

10. A battery according to any of the claims 1-9, wherein the battery information further is indicative of a maximum charging current parameter and/or an end-of-charge current parameter.

11. A battery according to any of the claims 1-10, wherein the battery information further is indicative of a third charging voltage parameter, said third charging voltage parameter preferably being indicative of a higher voltage level than indicated by the first charging voltage parameter.

12. A battery charging system comprising:

> a battery (10) according to claim 1, and
> a battery charger (40) including information receiving means for reading or sensing the stored battery information whereby charging of the battery may be controlled based on the first and second charging voltage parameters

> **characterised in that** the first and second charging voltage parameters represent predetermined maximum charging voltage levels.

13. A battery charging system according to claim 12, wherein the first charging voltage parameter is indicative of a higher voltage level than indicated by the second charging voltage parameter.

14. A battery charging system according to claim 12 or 13, wherein the system further comprises
> a power supply (46) for providing a charging current to said battery, and
> a communication bus, and
wherein the information receiving means receives the stored battery information via said communication bus, and further wherein a control means controls the power supply output based on the first and second charging voltage parameters.

15. A battery charging system according to any of the claims 12-14, wherein the second charging voltage parameter indicates a second voltage level substantially equal to a predetermined maximum end-of-charge voltage.

16. A battery charging system according to any of the claims 12-15, wherein the battery charger is adapted to control at least part of the charging process in a first voltage control mode so as to maintain a measured charging voltage substantially at or below a first voltage level indicated by the first charging voltage parameter.

17. A battery charging system according to claim 16, wherein
the system further comprises means for determining an external charging voltage representing an external battery terminal voltage when a charging current is supplied to the battery, and
the first charging voltage parameter indicates a first voltage level substantially equal to a predetermined maximum external charging or safety voltage.

18. A battery charging system according to claim 16, wherein
the system further comprises means for determining an internal charging cell voltage representing an internal cell voltage when a charging current is supplied to the battery, and
the first charging voltage parameter indicates a first voltage level substantially equal to a predetermined maximum internal charging or safety voltage.

19. A battery charging system according to claim 16, wherein
the battery further comprises a protection circuit (60) for interrupting charging when the voltage applied to the protection circuit reaches a predetermined threshold voltage,

the system further comprises means for determining a protection circuit charging voltage representing the voltage applied to the protection circuit when a charging current is supplied to the battery, and
the first charging voltage parameter indicates a first voltage level substantially equal to a predetermined maximum protection circuit charging voltage.

**20.** A battery charging system according to any of the claims 12-19, wherein the battery charger is adapted to control at least part of the charging process in a second voltage control mode so as to maintain a measured battery voltage substantially at or below a second voltage level indicated by the second charging voltage parameter.

**21.** A battery charging system according to claims 16 and 20, wherein the battery charger is adapted to charge the battery in the first voltage control mode during a first part of the charging process followed by charging the battery in the second voltage control mode during a second part of the charging process.

**22.** A battery charging system according to claims 15 and 20 or 21, wherein
the system further comprises means for determining an at least substantially resistance free battery voltage, and
the battery charger is adapted to control the second voltage control mode so as to maintain the at least substantially resistance free battery voltage substantially at or below the maximum end of-charge voltage

**23.** A battery charging system according to claim 22, wherein the battery charger is adapted to terminate charging in the first voltage control mode when the at least substantially resistance free battery voltage reaches the maximum end-of-charge voltage.

**24.** A battery charging system according to any of the claims 12-23, wherein the information means for storing the battery information comprises one or more resistors.

**25.** A battery charging system according to any of the claims 12-23, wherein the information means for storing the battery information comprises one or more electronic memories, which may be selected from the group consisting of non-volatile ROM, EEPROM EPROM, and any combination thereof.

**26.** A battery charging system according to claim 25, wherein the battery information is pre-stored in the electronic memory.

**27.** A battery charging system according to any of the claims 12-26, wherein the battery information further is indicative of a maximum charging current parameter and/or an end-of-charge current parameter.

**Patentansprüche**

**1.** Batterie (10) mit:

mindestens einer wiederaufladbaren Batteriezelle (11a, 11b, 11c) und einer Informationseinrichtung zum Speichern von Batterieinformationen als Anzeige mindestens eines ersten und eines zweiten Ladespannungsparameters, wobei die Batterieinformationen eine Form haben, die durch eine Informationsempfangseinrichtung eines entsprechenden Batterieladegeräts gelesen oder erfaßt werden kann,

**dadurch gekennzeichnet, daß** der erste und zweite Ladespannungsparameter vorbestimmte maximale Ladespannungspegel darstellen.

**2.** Batterie nach Anspruch 1, wobei der erste Ladespannungsparameter einen höheren Spannungspegel als den anzeigt, der durch den zweiten Ladespannungsparameter angezeigt wird.

**3.** Batterie nach Anspruch 1 oder 2, wobei der zweite Ladespannungsparameter einen zweiten Spannungspegel anzeigt, der im wesentlichen gleich einer vorbestimmten maximalen Ladeschlußspannung ist.

**4.** Batterie nach einem der Ansprüche 1 bis 3, wobei
der erste Ladespannungsparameter einen ersten Spannungspegel anzeigt, der im wesentlichen gleich einer vorbestimmten maximalen externen Lade- oder Schutzspannung ist.

5. Batterie nach einem der Ansprüche 1 bis 3, wobei
der erste Ladespannungsparameter einen ersten Spannungspegel anzeigt, der im wesentlichen gleich einer vorbestimmten maximalen internen Lade- oder Schutzspannung ist.

6. Batterie nach einem der Ansprüche 1 bis 5, wobei
die Batterie ferner eine Schutzschaltung (60) zum Unterbrechen des Ladens aufweist, wenn die an der Schutzschaltung anliegende Spannung eine vorbestimmte Schwellenspannung erreicht, und
der erste Ladespannungsparameter einen ersten Spannungspegel anzeigt, der im wesentlichen gleich einer vorbestimmten maximalen Schutzschaltungs-Ladespannung ist.

7. Batterie nach einem der Ansprüche 1 bis 6, wobei die Informationseinrichtung zum Speichern der Batterieinformationen einen oder mehrere Widerstände aufweist.

8. Batterie nach einem der Ansprüche 1 bis 7, wobei die Informationseinrichtung zum Speichern der Batterieinformationen einen oder mehrere elektronische Speicher aufweist, die aus der Gruppe ausgewählt sein können, die aus nichtflüchtigem ROM, EEPRCM, EPROM und jeder Kombination daraus besteht.

9. Batterie nach Anspruch 8, wobei die Batterieinformationen im elektronischen Speicher vorab gespeichert sind.

10. Batterie nach einem der Ansprüche 1 bis 9, wobei die Batterieinformationen ferner einen maximalen Ladestromparameter und/oder einen Ladeschlußstromparameter anzeigen.

11. Batterie nach einem der Ansprüche 1 bis 10, wobei die Batterieinformationen ferner einen dritten Ladespannungsparameter anzeigen, wobei der dritte Ladespannungsparameter vorzugsweise einen höheren Spannungspegel als den anzeigt, der durch den ersten Ladespannungsparameter angezeigt wird.

12. Batterieladesystem mit:

einer Batterie (10) nach Anspruch 1, und
einem Batterieladegerät (40) mit einer Informationsempfangseinrichtung zum Lesen oder Erfassen der gespeicherten Batterieinformationen, wodurch das Laden der Batterie auf der Grundlage des ersten und zweiten Ladespannungsparameters gesteuert werden kann,

**dadurch gekennzeichnet, daß** der erste und zweite Ladespannungsparameter vorbestimmte maximale Ladespannungspegel darstellen.

13. Batterieladesystem nach Anspruch 12, wobei der erste Ladespannungsparameter einen höheren Spannungspegel als den anzeigt, der durch den zweiten Ladespannungsparameter angezeigt wird.

14. Batterieladesystem nach Anspruch 12 oder 13, wobei das System ferner aufweist:

eine Stromversorgung (46) zum Zuführen eines Ladestroms zur Batterie, und
einen Kommunikationsbus, und

wobei die Informationsempfangseinrichtung die gespeicherten Batterieinformationen über den Kommunikationsbus empfängt und wobei ferner eine Steuereinrichtung die Stromversorgungsausgabe auf der Grundlage des ersten und zweiten Ladespannungsparameters steuert.

15. Batterieladesystem nach einem der Ansprüche 12 bis 14, wobei der zweite Ladespannungsparameter einen zweiten Spannungspegel anzeigt, der im wesentlichen gleich einer vorbestimmten maximalen Ladeschlußspannung ist.

16. Batterieladesystem nach einem der Ansprüche 12 bis 15, wobei das Batterieladegerät geeignet ist, mindestens einen Teil des Ladevorgangs in einem ersten Spannungssteuermodus zu steuern, um eine Meßladespannung im wesentlichen auf oder unter einem durch den ersten Ladespannungsparameter angezeigten ersten Spannungspegel zu halten.

17. Batterieladesystem nach Anspruch 16, wobei

das System ferner eine Einrichtung zum Bestimmen einer externen Ladespannung als Darstellung einer externen Batterieklemmenspannung aufweist, wenn ein Ladestrom der Batterie zugeführt wird, und
der erste Ladespannungsparameter einen ersten Spannungspegel anzeigt, der im wesentlichen gleich einer vorbestimmten maximalen externen Lade- oder Schutzspannung ist.

18. Batterieladesystem nach Anspruch 16, wobei
das System ferner eine Einrichtung zum Bestimmen einer internen Ladezellenspannung als Darstellung einer internen Zellenspannung aufweist, wenn ein Ladestrom der Batterie zugeführt wird, und
der erste Ladespannungsparameter einen ersten Spannungspegel anzeigt, der im wesentlichen gleich einer vorbestimmten maximalen internen Lade- oder Schutzspannung ist.

19. Batterieladesystem nach Anspruch 16, wobei
die Batterie ferner eine Schutzschaltung (60) zum Unterbrechen des Ladenvorgangs aufweist, wenn die an der Schutzschaltung anliegende Spannung eine vorbestimmte Schwellenspannung erreicht,
das System ferner eine Einrichtung zum Bestimmen einer Schutzschaltungs-Ladespannung als Darstellung der an der Schutzschaltung anliegenden Spannung aufweist, wenn ein Ladestrom der Batterie zugeführt wird, und
der erste Ladespannungsparameter einen ersten Spannungspegel anzeigt, der im wesentlichen gleich einer vorbestimmten maximalen Schutzschaltungs-Ladespannung ist.

20. Batterieladesystem nach einem der Ansprüche 12 bis 19, wobei das Batterieladegerät geeignet ist, mindestens einen Teil des Ladevorgangs in einem zweiten Spannungssteuermodus zu steuern, um eine Meßbatteriespannung im wesentlichen auf oder unter einem durch den zweiten Ladespannungsparameter angezeigten zweiten Spannungspegel zu halten.

21. Batterieladesystem nach Anspruch 16 und 20, wobei das Batterieladegerät geeignet ist, die Batterie im ersten Spannungssteuermodus während eines ersten Teils des Ladevorgangs zu laden, gefolgt vom Laden der Batterie im zweiten Spannungssteuermodus während eines zweiten Teils des Ladevorgangs.

22. Batterieladesystem nach Anspruch 15 und 20 oder 21, wobei
das System ferner eine Einrichtung zum Bestimmen einer mindestens im wesentlichen widerstandsfreien Batteriespannung aufweist, und
das Batterieladegerät geeignet ist, den zweiten Spannungssteuermodus so zu steuern, daß die im wesentlichen widerstandsfreie Batteriespannung im wesentlichen auf oder unter der maximalen Ladeschlußspannung gehalten wird.

23. Batterieladesystem nach Anspruch 22, wobei das Batterieladegerät geeignet ist, das Laden im ersten Spannungssteuermodus zu beenden, wenn die im wesentlichen widerstandsfreie Batteriespannung die maximale Ladeschlußspannung erreicht.

24. Batterieladesystem nach einem der Ansprüche 12 bis 23, wobei die Informationseinrichtung zum Speichern der Batterieinformationen einen oder mehrere widerstände aufweist.

25. Batterie nach einem der Ansprüche 12 bis 23, wobei die Informationseinrichtung zum Speichern der Batterieinformationen einen oder mehrere elektronische Speicher aufweist, die aus der Gruppe ausgewählt sein können, die aus nichtflüchtigem ROM, EEPROM, EPROM und jeder Kombination daraus besteht.

26. Batterieladesystem nach Anspruch 25, wobei die Batterieinformationen im elektronischen Speicher vorab gespeichert sind.

27. Batterieladesystem nach einem der Ansprüche 12 bis 26, wobei die Batterieinformationen ferner einen maximalen Ladestromparameter und/oder einen Ladeschlußstromparameter anzeigen.


**Revendications**

1. Une batterie (10) comprenant au moins une cellule de batterie rechargeable (11a, 11b, 11c) ainsi que des capacités informatiques pour le stockage d'information propre à la batterie indiquant au moins un premier et un second paramètre de tension de charge, ladite information étant stockée sous une forme pouvant être lue ou détectée par un dispositif de réception d'information incorporé au chargeur de batteries correspondant, **caractérisée par le fait que** les premier et second paramètres de tension de charge représentent des niveaux prédéterminés de tension de charge maximum.

2. Une batterie selon la revendication n° 1, dans laquelle le premier paramètre de tension de charge indique un niveau de tension plus élevé que celui indiqué par le second paramètre de tension de charge.

3. Une batterie selon les revendications n° 1 ou 2, dans laquelle le second paramètre de tension de charge indique un second niveau de tension substantiellement égal à une tension de fin de charge maximum prédéterminée.

4. Une batterie selon n'importe laquelle des revendications n° 1 à 3, dans laquelle le premier paramètre de tension de charge indique un premier niveau de tension substantiellement égal à une tension externe de charge ou de sécurité maximum prédéterminée.

5. Une batterie selon n'importe laquelle des revendications n° 1 à 3, dans laquelle le premier paramètre de tension de charge indique un premier niveau de tension substantiellement égal à une tension interne de charge ou de sécurité maximum prédéterminée.

6. Une batterie selon n'importe laquelle des revendications n° 1 à 5, dans laquelle la batterie comprend en plus un circuit de protection (60) pour interrompre le processus de chargement lorsque la tension appliquée sur le circuit de protection atteint une tension limite prédéterminée, et que le premier paramètre de tension de charge indique un premier niveau de tension substantiellement égal à une tension de charge maximum prédéterminée pour le circuit de protection.

7. Une batterie selon n'importe laquelle des revendications n° 1 à 6, dans laquelle les capacités informatiques servant au stockage des informations de la batterie comprennent une ou plusieurs résistances.

8. Une batterie selon n'importe laquelle des revendications n° 1 à 7, dans laquelle les capacités informatiques servant au stockage des informations de la batterie comprennent une ou plusieurs mémoires électroniques, laquelle pouvant être choisie parmi le groupe constitué des ROM, EEPROM, EPROM non volatils, ou de n'importe quelle combinaison de celles-ci.

9. Une batterie selon la revendication n° 8, dans laquelle l'information de la batterie est pré-inscrite dans la mémoire électronique.

10. Une batterie selon n'importe laquelle des revendications n° 1 à 9, dans laquelle l'information de la batterie indique en plus un paramètre de courant de charge maximum et/ou un paramètre de courant de fin de charge.

11. Une batterie selon n'importe laquelle des revendications n° 1 à 10, dans laquelle l'information de la batterie indique en plus un paramètre de troisième tension de charge ; ce paramètre de troisième tension de charge indiquant de préférence un niveau de tension plus élevé que celui indiqué par le premier paramètre de tension de charge.

12. Un système de chargeur de batterie comprenant :

   une batterie (10) selon la revendication n° 1, et
   un chargeur de batteries (40) comprenant des capacités de réception d'information pour la lecture ou la détection de l'information stockée dans la batterie, au moyen de laquelle la charge de la batterie peut être contrôlée en fonction des premier et second paramètres de tension de charge, et **caractérisée par le fait que** les premier et second paramètres de tension de charge représentent des niveaux prédéterminés de tension de charge maximum.

13. Un système de chargeur de batterie selon la revendication n° 12, dans lequel le premier paramètre de tension de charge indique un niveau de tension plus élevé que celui indiqué par le second paramètre de tension de charge.

14. Un système de chargeur de batterie selon les revendications n° 12 ou 13, dans lequel le système comprend en plus :

   • Un bloc d'alimentation (46) servant à fournir le courant de charge à la batterie, et

- Un bus de communication, tel que le dispositif de réception d'information reçoit l'information stockée dans la batterie par ledit bus de communication ; et dans lequel, en plus, le dispositif de contrôle régule la sortie du bloc d'alimentation en fonction des premier et second paramètres de tension de charge.

15. Un système de chargeur de batterie selon n'importe laquelle des revendications n° 12 à 14, dans lequel le second paramètre de tension de charge indique un second niveau de tension substantiellement égal à une tension de fin de charge maximum prédéterminée.

16. Un système de chargeur de batterie selon n'importe laquelle des revendications n° 12 à 15, dans lequel le chargeur de batterie est adapté pour contrôler au moins une partie du processus de charge dans un mode de contrôle de la première tension de charge, de manière à maintenir la tension de charge mesurée à un niveau substantiellement égal ou inférieur à un premier niveau de tension indiqué par le premier paramètre de tension de charge.

17. Un système de chargeur de batterie selon la revendication n° 16, dans lequel le système comprend en plus un dispositif pour déterminer une tension de charge externe représentant la tension aux bornes d'une batterie externe lorsqu'un courant de charge est fourni à cette batterie, et le premier paramètre de tension de charge indique un premier niveau de tension substantiellement égal à une tension externe de charge ou de sécurité maximum prédéterminée.

18. Un système de chargeur de batterie selon la revendication n° 16, dans lequel le système comprend en plus un dispositif pour déterminer une tension de charge interne de cellule, représentant la tension d'une cellule interne lorsqu'un courant de charge est fourni à la batterie, et le premier paramètre de tension de charge indique un premier niveau de tension substantiellement égal à une tension interne de charge ou de sécurité maximum prédéterminée.

19. Un système de chargeur de batterie selon la revendication n° 16, dans lequel la batterie comprend en plus un circuit de protection (60) pour interrompre le processus de charge lorsque la tension appliquée sur le circuit de protection atteint une tension limite prédéterminée, le système comprend en plus un dispositif pour déterminer la tension de charge d'un circuit de protection représentant la tension appliquée au circuit de protection lorsqu'un courant de charge est fourni à la batterie, et le premier paramètre de tension de charge indique un premier niveau de tension substantiellement égal à une tension de charge maximum prédéterminée pour le circuit de protection.

20. Un système de chargeur de batterie selon n'importe laquelle des revendications n° 12 à 19, dans lequel le chargeur de batterie est adapté pour contrôler au moins une partie du processus de charge dans un mode de contrôle de seconde tension, de manière à maintenir la tension mesurée sur la batterie à un niveau substantiellement égal ou inférieur à un second niveau de tension indiqué par le second paramètre de tension de charge.

21. Un système de chargeur de batterie selon les revendications n° 16 et 20, dans lequel le chargeur de batterie est adapté pour charger la batterie dans le mode de contrôle de première tension durant une première partie du processus de charge, suivi par le chargement de la batterie dans le mode de contrôle de la seconde tension durant une seconde partie du processus de charge.

22. Un système de chargeur de batterie selon les revendications n° 15 et 20 ou 21, dans lequel le système comprend en plus un dispositif pour déterminer une tension correspondant au moins substantiellement à la tension aux électrodes de la batterie (résistance free voltage), et le chargeur de batterie est adapté pour contrôler le mode de contrôle de seconde tension de manière à maintenir cette tension correspondant au moins substantiellement à la tension aux électrodes de la batterie (resistance free voltage) substantiellement égale ou inférieure à la tension de fin de charge maximum.

23. Un système de chargeur de batterie selon la revendication n° 22, dans lequel le chargeur de batterie est adapté pour terminer l'opération de charge dans le mode de contrôle de première tension lorsque la tension correspondant au moins substantiellement à la tension aux électrodes de la batterie (resistance free voltage) atteint la tension maximum de fin de charge.

24. Un système de chargeur de batterie selon n'importe laquelle des revendications n° 12 à 23, dans lequel le dispositif informatique servant au stockage des informations de la batterie comprend une ou plusieurs résistances.

25. Un système de chargeur de batterie selon n'importe laquelle des revendications n° 12 à 23, dans lequel le dispositif informatique servant au stockage des informations de la batterie comprend une ou plusieurs mémoires électroniques, laquelle pouvant être choisie parmi le groupe constitué des ROM, EEPROM, EPROM non volatils, ou de n'importe quelle combinaison de celles-ci.

26. Un système de chargeur de batterie selon la revendication n° 25, dans lequel l'information de la batterie est préinscrite dans la mémoire électronique.

27. Un système de chargeur de batterie selon n'importe laquelle des revendications n° 12 à 26, dans lequel l'information de la batterie indique en plus un paramètre de courant maximum de charge et/ou un paramètre de courant de fin de charge.

**Fig. 1**

EP 1 040 547 B1

Fig. 2

EP 1 040 547 B1

Fig. 3

# Fig. 4

Initialise $\sim 100$

Measure data
Process data $\sim 101$

$\sim 102$
(Voc = Veoc
OR Voc > Veoc)
AND
Ich < Ieoc

Yes

End of
charge $\sim 107$

No

$\sim 103$
Ich < Imax AND
Vch < Vchmax AND
Vpc < Vpcmax AND
Voc < Veoc

No

$\sim 105$
Ich > Imax OR
Vch > Vchmax OR
Vpc > Vpcmax OR
Voc > Veoc

No

Yes

Yes

Increase
power $\sim 104$

Decrease
power $\sim 106$

# Fig. 5

# Fig. 6

**Fig. 7**

Measure
Vpc $\sim$ *150*

Measure
Voc $\sim$ *151*

Compare
Vpc to Voc $\sim$ *152*

Determine
correction
voltage $\sim$ *153*

Store
correction
voltage $\sim$ *154*

# Fig. 8

## Fig. 9

EP 1 040 547 B1

Fig. 10

EP 1 040 547 B1

Fig. 11

EP 1 040 547 B1

Initialise — ~160

Measure data
Process data — ~161

~162

Vch >= Vmax
AND
Ich =< Iend

—Yes—

Determine
remaining
period of
charging
time.
Vch = Vmax — ~168

No

~163

Ich < Imax AND
Vch < Vmax

—No→

~165

Ich > Imax OR
Vch > Vmax

—No→

End of
charge

167

Yes

Increase
power — ~164

Yes

Decrease
power — ~166

## Fig. 12

40

Fig. 13